# EUROPÄISCHE PATENTSCHRIFT

(11) **EP 0 666 989 B1**
(45) Veröffentlichungstag und Bekanntmachung des Hinweises auf die Patenterteilung: **08.03.2000**
(21) Anmeldenummer: 94923633.5
(22) Anmeldetag: 23.08.1994
(51) Int. Cl.: G01S 13/82

(54) **VERFAHREN UND SCHALTUNGSANORDNUNGEN ZUR DATENÜBERTRAGUNG ZWISCHEN EINER ABFRAGE- UND EINER ANTWORTSTATION**
METHOD AND CIRCUITS FOR THE TRANSMISSION OF DATA BETWEEN AN INTERROGATOR STATION AND A TRANSPONDER STATION
PROCEDE ET CIRCUITS POUR LE TRANSFERT DE DONNEES ENTRE UN POSTE D'INTERROGATION ET UN POSTE DE REPONSE

(30) Priorität: 23.08.1993 CH 250193; 17.09.1993 CH 280893; 03.11.1993 WO PCT/CH93/00252; 04.02.1994 CH 32994; 03.03.1994 CH 62894; 03.03.1994 CH 62994
(43) Veröffentlichungstag der Anmeldung: 16.08.1995
(73) Patentinhaber: Siemens Schweiz AG, 8047 Zürich (CH)
(72) Erfinder: AGGTELEKY, Peter, CH-8049 Zürich (CH); BÄCHTIGER, Rolf, CH-8966 Oberwil-Lieli (CH); LODER, Max, CH-8906 Bonstetten (CH); DILL, Roland, D-81547 München (DE); MAGORI, Valentin, D-81539 München (DE); REINDL, Leonhard, D-83134 Prutting (DE); RUILE, Werner, D-80636 München (DE); RUPPEL, Clemens, D-81479 München (DE); OSTERTAG, Thomas, D-89075 Ulm (DE); SCHMIDT, Frank, D-81667 München (DE)
(86) Internationale Anmeldenummer: CH9400165
(87) Internationale Veröffentlichungsnummer: WO9506261

(56) Entgegenhaltungen:
- DE-A- 3 131 188
- FR-A- 2 624 677
- ELECTRONIC DESIGN, Bd.38, Nr.8, 26. April 1990, HASBROUCK HEIGHTS USA Seite 29 JOHN GOSCH 'SAW technology drives auto id, road-toll system' in der Anmeldung erwähnt

## Beschreibung

Die vorliegende Erfindung betrifft ein Verfahren nach dem Oberbegriff des Patentanspruchs 1 sowie ein zur Durchführung des Verfahrens geeignetes Übertragungssystem nach Anspruch 12.

Aus dem Stand der Technik sind verschiedene Abfrage- und Antwortstationen bekannt, die über eine Funkverbindung Informationen bidirektional untereinander austauschen, die u.a. für Mess- oder Steuerzwecke verwendet werden. Aus der Radartechnik sind z.B. Interrogatoren bekannt, welche Abfrageimpulse an Transponder senden und dadurch die gewünschten Informationen in Form von Antwortimpulsen erhalten.

Aus John Gosch, SAW TECHNOLOGY DRIVES AUTO ID, ROAD-TOLL SYSTEM, ELECTRONIC DESIGN vom 28. April 1990, Seite 29 ist beispielsweise der Einsatz von OFW bzw. SAW (Oberflächenwellen bzw. surface acoustic waves) - Bauteilen zur Identifikation von Automobilen bekannt, die eine Kontrollstation passieren. Das OFW-Bauteil ist dabei in der Lage, ein eintreffendes Signal in eine Oberflächenwelle umzuwandeln, die sich über die Oberfläche des OFW-Bauteils ausbreitet. Auf der Oberfläche des OFW-Bauteils sind elektroakustische Wandler und Reflektoren vorgesehen, die in der Lage sind, einen Teil der an ihnen vorbeilaufenden Oberflächenwellen wieder in elektrische Signale umzuwandeln. Jedes zu identifizierende Automobil weist dabei ein OFW-Bauteil auf, bei dem eine bestimmte Anzahl Reflektoren in bestimmten Abständen zueinander derart auf der Oberfläche des OFW-Bauteils aufgebracht sind, dass sich dieses OFW-Bauteil von allen weiteren in anderen Automobilen verwendeten OFW-Bauteilen deutlich unterscheidet. Diese bestimmte geometrisch einmalige Anordnung der Reflektoren führt auch zu einem elektrischen Verhalten, das für jedes OFW-Bauteil typisch ist. D.h. jedes OFW-Bauteil, das mit einem festgelegten Abfragesignal beaufschlagt wird, sendet von den einzelnen Reflektoren Signale an die Abfragestation zurück. Durch die für jedes OFW-Bauteil typische Anordnung der Reflektoren werden die einzelnen Antwortsignale ebenfalls mit entsprechend typischen Verzögerungen an die Abfragestation zurückgesandt. Die von einem OFW-Bauteil nach Erhalt des Abfragesignals abgegebene Antwort, die in Form von mehreren zeitlich gegeneinander verschobenen Signalen erfolgt, unterscheidet sich daher ebenfalls deutlich von Antworten, die von anderen OFW-Bauteilen abgegeben werden.

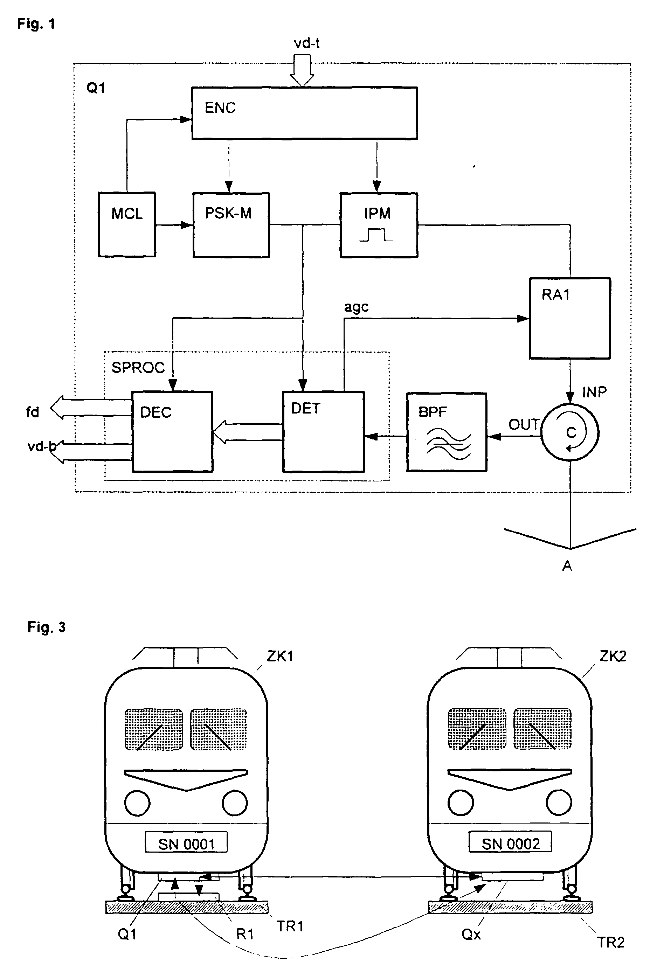

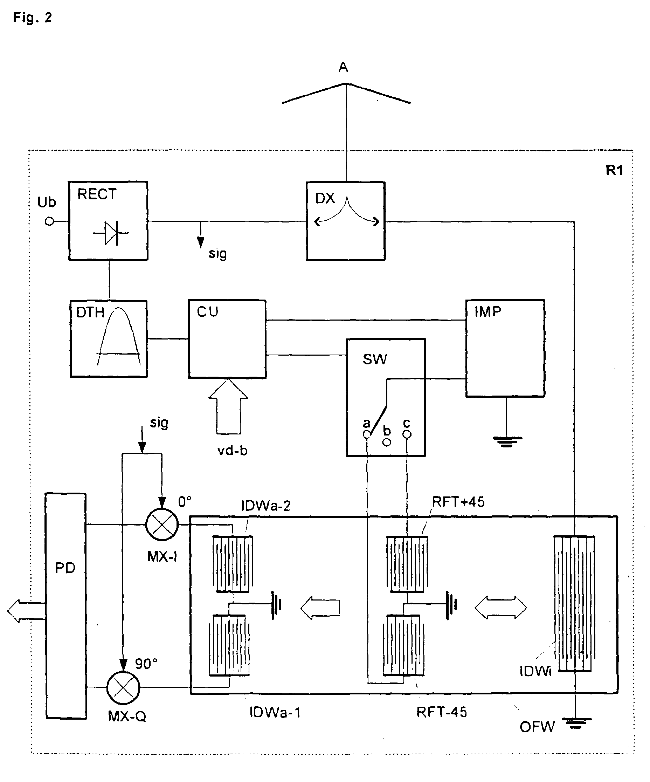

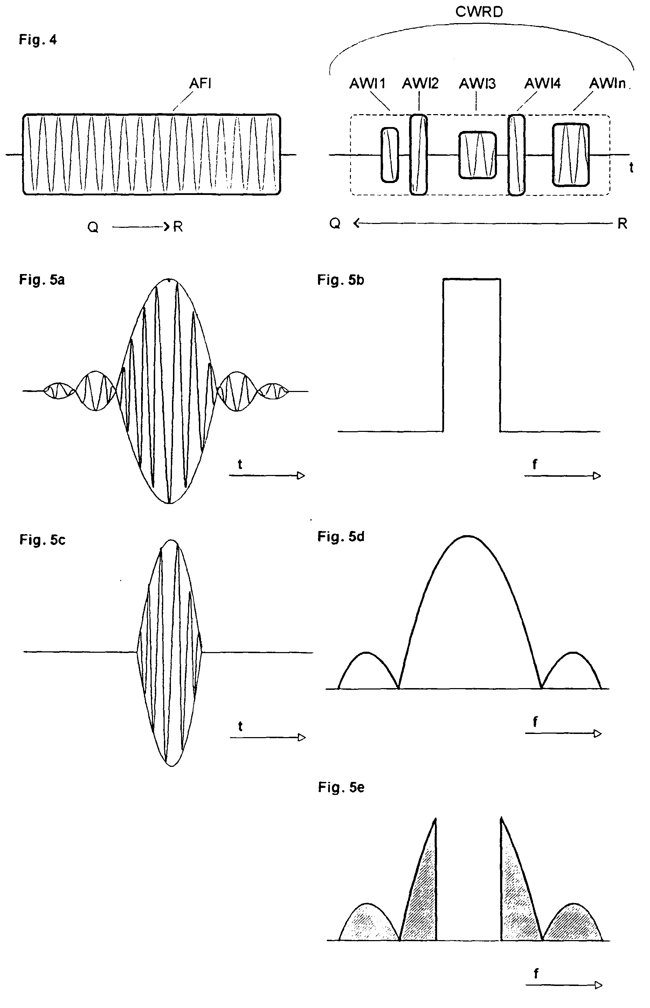

Fig. 4 zeigt einen möglichen Verlauf der Antwortimpulse CWRD, die vom OFW-Bauteil als Antwort auf einen Abfrageimpuls AFI abgegeben werden. Als Antwort auf einen einzelnen Abfrageimpuls AFI retourniert das OFW-Bauteil nach einer zeitlichen Verzögerung demgemäss eine Folge von zeitlich gegeneinander verschobenen Pulsen, die als Kodewort zur Abfragestation gelangen.

Aus der FR-A-2 624 677 ist ferner ein Verfahren zur Datenübertragung zwischen Abfrage- und Antwortstationen sowie eine entsprechende Abfragestation und eine entsprechende Antwortstation bekannt.

Probleme können bei diesen bekannten Datenübertragungsverfahren entstehen, falls mehrere nicht zentral gesteuerte Abfragestationen Q nahe beieinander betrieben werden. Wenn z.B. eine erste Abtragestation Q, die einen Abfrageimpuls ausgesendet hat, während einem Zeitintervall Tr auf Empfang geschaltet wird und eine zweite Abtragestation Q während diesem Zeitintervall Tr einen eigenen Abfrageimpuls aussendet, so besteht die Gefahr, dass die erste Abfragestation Q zusätzlich zu den von einer zugehörigen Antwortstation R abgegebenen Antwortimpulsen einen Abfrageimpuls von der zweiten Abfragestation Q aufnimmt. Derartige Verhältnisse können bei der Verwendung von Abfrageund Antwortstationen in der Eisenbahntechnik z.B. in grösseren Bahnhöfen beim gleichzeitigen Eintreffen mehrerer Züge oder auf einem Flughafengelände bei der Verwendung nahe zueinander gelegener Abfragestationen Q auftreten. Bei zwei oder mehreren parallel geführten Geleisen besteht z.B. das in Fig. 3 dargestellte Problem, dass Abfrageimpulse von der Abfragestation Q nicht nur zu der zugehörigen Antwortstation R gelangen, sondern auch zu einer Abfragestation Qx, die sich auf Nachbargeleisen befindet. Umgekehrt können Abfrageimpulse von der Abfragestation Qx ebenfalls zur Abfragestation Q gelangen und sich den von der Antwortstation R zur Abfragestation Q übertragenen Antwortsignalen überlagern. Obwohl Störungen hauptsächlich durch die verhältnismässig starken Abfrageimpulse hervorgerufen werden, können auch Antwortsignale, die zu benachbarten Abfragestationen Qx gelangen oder von benachbarten Antwortstationen Rx eintreffen, ebenfalls zu Störungen der Kommunikation führen. Da zur Sicherstellung guter Übertragungsverhältnisse eine relativ hohe Sendeleistung benötigt wird, tritt dieses Problem besonders störend auf.

In der Radartechnik ist ausserdem von Bedeutung, dass militärische Stationen, die starke Signale aussenden, leicht detektiert werden können. Detektierte Stationen könnten in der Folge durch Gegenmassnahmen gestört werden.

Der vorliegenden Erfindung liegt daher die Aufgabe zugrunde, ein Verfahren sowie ein zu dessen Durchführung geeignetes Übertragungssystem anzugeben, durch die Störungen vermieden werden, die beim gleichzeitigen Betrieb mehrerer Abfragestationen auftreten könnten.

Diese Aufgabe wird durch die in den Patentansprüchen 1 bzw. 12 angegebenen Massnahmen gelöst.

Das beanspruchte Verfahren erlaubt den gleichzeitigen Betrieb mehrerer Abtragestationen, die Abfragesignale aussenden, ohne dass gegenseitige Störungen auftreten. Das Verfahren ermöglicht daher eine hohe Betriebssicherheit des aus allen Abtrage- und Antwortstationen bestehenden Kommunikationssystems. Ferner besteht die Möglichkeit zur Übertragung von veränderlichen und unveränderlichen Daten zwischen der Abfrage- und der Antwortstation. Die angegebenen Antwortstationen, die zur Durchführung des Verfahrens geeignet sind, ermöglichen eine vorteilhafte Modulation und Demodulation der zu übertragenden bzw. der empfangenen Signale. Ferner kann durch das Verfahren auch die Detektierbarkeit der Stationen reduziert werden, die Abfrage- oder Antwortsignale aussenden.

Die Erfindung wird nachfolgend anhand einer Zeichnung beispielsweise näher erläutert. Dabei zeigt:
- Fig. 1: eine erste aus einer Sende- und einer Empfangseinheit bestehende Abfragestation,
- Fig. 2: eine erste aus einer Sende- und einer Empfangseinheit bestehende Antwortstation,
- Fig. 3: zwei schienengebundene Fahrzeuge, die eine an einem der Geleise vorgesehene Antwortstation passieren,
- Fig. 4: einen möglichen Signalverlauf von Abfrage- und Antwortsignalen bzw. den Verlauf von Ein- und Ausgangssignalen einer Antwortstation (s. z.B. Fig. 8),
- Fig. 5: den Verlauf dervon der Antwortstation empfangenen und abgegebenen Signale,
- Fig. 6: den Verlauf von geregelten Abtrage und Antwortsignalen zweier Stationen,
- Fig. 7: die Darstellung von Such- und Detektionssignalen im Frequenzbereich,
- Fig. 8: den Verlauf von Abtrage- und Antwortsignalen im Zeit- und im Frequenzbereich,
- Fig. 9: eine zweite Abfragestation,
- Fig. 10: eine zweite Antwortstation und
- Fig. 11: eine dritte Antwortstation.

Zur Erläuterung des erfindungsgemässen Verfahrens werden nachfolgend zwei zueinander korrespondierende Abfrage- und Antwortstationen Q1, R1 beispielsweise näher beschrieben. Daten werden zwischen den Stationen Q1, R1 mittels modulierten Impulsen übertragen. Das erfindungsgemässe Verfahren lässt sich jedoch grundsätzlich in allen Abtrage- und Antwortstationen anwenden, zwischen denen modulierte Trägersignale übertragen werden. Die bevorzugte Übertragung von amplitudenmodulierten Trägersignalen wird in einem späteren Abschnitt erläutert.

Fig. 1 zeigt eine Abfragestation Q1, die zur Abgabe von Abfrageimpulsen und zum Empfang von Antwortimpulsen vorgesehen ist. Als Antwort auf einen Abfrageimpuls wird z.B. von der in Fig. 2 dargestellten Antwortstation R1 eine Sequenz von Antwortimpulsen abgegeben (s. Fig. 4). Zur Datenübertragung werden die zur Antwortstation R1 gesandten trägerfrequenten Signale bzw. die Abfrageimpulse in Abhängigkeit von zu übertragenden Daten moduliert. Abtrageimpulse, die zur Antwortstation R1 gesandt werden, werden z.B. phasen- oder frequenzmoduliert; Signale hingegen, die zurück zur Abfragestation Q1 reflektiert werden, werden phasen- und/oder amplitudenmoduliert. In der in Fig. 2 gezeigten Antwortstationen R1 besteht ferner die Möglichkeit zur Positions- und Längenmodulation der reflektierten Antwortimpulse. D.h. die Antwortimpulse können zu beliebigen Zeitpunkten mit einstellbarer Pulslänge zusammenhängend oder segmentiert reflektiert werden.

Dazu weist die Abfragestation Q1 einen Oszillator MCL auf, der einerseits mit einem Enkoder ENC und andererseits über einen Phasenmodulator PSK-M, einen Pulsmodulator IPM, einen Regelverstärker RA1 und einen Zirkulator C mit einer Antenne A verbunden ist. Der Zirkulator C ist ferner über ein Bandpassfilter BPF und einen Detektor DET mit einem Dekoder DEC verbunden. Der Ausgang des Phasenmodulators PSK-M ist zusätzlich mit den Referenzfrequenzeingängen des Dekoders DEC und des Detektors DET verbunden. Der Enkoder ENC ist mit Steuereingängen des Phasenmodulators PSK-M und des Pulsmodulators IPM verbunden. Dem Fachmann ist bekannt, dass die Funktionen des Dekoders DEC und des Detektors DET durch einen Signalprozessor SPROC ausgeübt werden können. Ferner ist der Detektor DET zur Abgabe eines Steuersignals agc an einen Steuereingang des Regelverstärkers RA1 vorgesehen, durch das die Sendeleistung in Abhängigkeit der detektierten Daten beeinflussbar ist.

Die gezeigte Schaltung funktioniert folgendermassen:

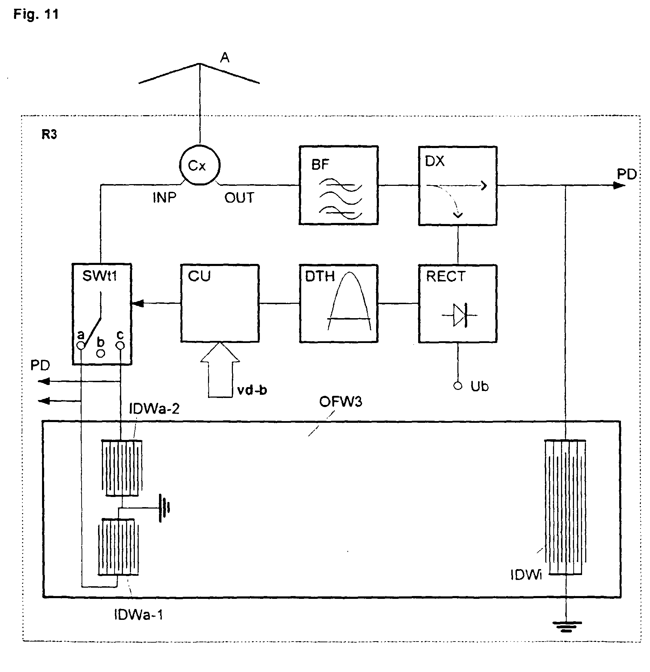

Der Oszillator MCL führt dem durch den Enkoder ENC gesteuerten Phasenmodulator PSK-M ein kontinuierliches Hochfrequenzsignal zu, das in Abhängigkeit der an die Antwonstation R zu übertragenden Daten vd-t durch den Phasenmodulator PSK-M phasenmoduliert und an den Pulsmodulator IPM abgegeben wird. Durch den Phasenmodulator PSK-M wird die Phase der ausgesendeten Pulse schrittweise von Puls zu Puls in Abhängigkeit der zu übertragenden Daten geändert. Diese sogenannte Phasendifferenzcodierung wird in Herter/Röcker, Nachrichtentechnik, 1. Auflage, München 1976 auf Seite 209 näher beschrieben ist. Die Phasendifferenzcodierung erlaubt eine Demodulation ohne Trägerableitung, da die Nachricht in dem Phasenunterschied von zwei aufeinander folgenden Schritten enthalten ist. Es genügt daher in der Demodulationsstufe jeden ankommenden Puls mit dem vorhergehenden zu vergleichen. Zur Erhöhung der Übertragungsrate werden vorzugsweise mehrere unterschiedliche Phasenschritte vorgesehen (z.B. 0°, 45°, 90°, 135°). Das modulierte Hochfrequenzsignal wird durch den ebenfalls vom Enkoder ENC gesteuerten Pulsmodulator IPM in kurze Pulse umgeformt, die über den Regelverstärker RA1 und den Zirkulator C an die Antenne A abgegeben und der z.B. in Fig. 2 gezeigten Antwortstation R1 zugeführt werden. Eine von der Antwonstation R1 ausgesandte Sequenz von Antwortimpulsen, denen feste und/oder veränderliche Daten fd, vd-b aufgeprägt sind, wird von der Antenne A zurück über den Zirkulator C und das Bandpassfilter BPF zum Detektor DET und weiter zum Dekoder DEC übertragen. Der Dekoder DEC ermittelt aus den vom Detektor DET abgegebenen Signalen die übertragenen Daten fd, vd-b. Die erfindungswesentliche Funktion des Bandpassfilters BPF wird in einem nachstehenden Abschnitt (nach der Beschreibung von Fig. 2 und 11) erläutert.

Die in Fig. 2 gezeigte Antwortstation R1 enthält ein OFW-Bauteil OFW1, auf dem ein Eingangs-Interdigitalwandler IDWi, je zwei gegeneinander verschobene Reflektoren RFT + 45, RFT-45 und zwei Ausgangs-Interdigitalwandler IDWa-1 und IDWa-2 vorgesehen sind. Die phasenmodulierten Abfrageimpulse werden von der Antenne A über einen Diplexer DX einerseits dem Eingangs-Interdigitalwandler IDWi und andererseits direkt dem ersten Eingang einer Mischstufe MX-I und einer Mischstufe MX-Q zugeführt, deren zweiter Eingang je mit dem Ausgangs-Interdigitalwandler IDWa-1 bzw. IDWa-2 und deren Ausgang je mit einem Eingang eines Phasendetektors PD verbunden ist. Die Ausgangs-Interdigitalwandler IDWa-1 und IDWa-2 sind auf dem Substrat um ein Viertel der Wellenlänge der Oberflächenwellen gegeneinander verschoben, so dass den entsprechenden Eingängen der Mischstufen MX-I, MX-Q zwei um 90° gegeneinander phasenverschobene Referenzsignale zugeführt werden, die je mit dem direkt vom Diplexer DX an die Mischstufen MX-I, MX-Q abgegebenen Signal gemischt werden. Die vom Eingangs-Interdigitalwandler IDWi gebildeten Oberflächenwellen gelangen daher zu den vorzugsweise um ein Achtel der Wellenlänge der Oberflächenwellen (oder entsprechend dem gewünschten Modulationsgrad) gegeneinander verschobenen Reflektoren RFT + 45, RFT-45, die z.B. zwischen den Interdigitalwandlern IDWi, IDWa-1 bzw. IDWa-2 auf dem OFW-Bauteil (OFW) vorgesehen sind und werden dort als Antwortimpulse über den Eingangs-Interdigitalwandler IDWi zurück zum Diplexer DX und weiter zur Abtragestation Q reflektiert. Ferner gelangen die Oberflächenwellen nach einer bestimmten Laufzeit zu den Ausgangs-Interdigitalwandlern IDWa-1, IDWa-2. Der Abstand der Ein- und Ausgangs-Interdigitalwandler IDWi, IDWa-1, IDWa-2 wird dabei derart gewählt, dass die Laufzeit der Oberflächenwellen der Periodendauer der Pulsrepetitionsfrequenz der Abfrageimpulse entspricht. Zu dem Zeitpunkt, zu dem das durch das OFW-Bauteil OFW verzögerte Abfragesignal bei den Mischstufen eintrifft, steht daher jeweils der nächste Abtrageimpuls, der vom Diplexer DX direkt zu den Mischstufen MX-I, MX-Q geführt wird, für die Demodulation zur Verfügung. Die Demodulation geschieht dabei, wie oben erwähnt, durch einen Phasenvergleich der beiden von den Mischstufen MX-I, MX-Q abgegebenen Signale. Auf die lokale Erzeugung eines Referenzsignals für die Demodulation kann daher verzichtet werden.

Der Diplexer DX ist über eine Gleichrichterstufe RECT und eine Schwellwertschaltung DTH ferner mit einer Steuereinheit CU verbunden, die zur Steuerung einer einstellbaren Impedanz IMP vorgesehen ist, die über einen von der Steuereinheit CU betätigten Schalter SW mit einem der Reflektoren RFT + 45; RFT-45 verbindbar ist. Durch das Zuschalten der Impedanzen lässt sich das Reflektionsverhalten der Reflektoren RFT + 45; RFT-45 beliebig einstellen. Zur Erzielung von maximalen Reflexionswerten werden die Widerständen IMP derart gewählt, dass die Eigenkapazität der Reflektoren RFT durch eine in Abhängigkeit der Betriebsfrequenz gewählte Induktivität kompensiert wird. Zur Erzielung von minimalen Reflexionswerten vorzugsweise kapazitäve Widerstände IMP oder Kurzschlussschlaufen gewählt. Der Modulationsgrad lässt sich daher auch bei der Amplitudenmodulation beliebig ändern. Die Beschaltung von Interdigitalwandlern kann in gleicher Weise erfolgen. Zur Optimierung des Verfahrens ist vorzusehen, dass beide Reflektoren RFT + 45; RFT-45 gleichzeitig mit einer Impedanz verbindbar sind. Von der Gleichrichterstufe RECT, die eine Versorgungsspannung Ub abgibt, gelangt dabei ein gleichgerichtetes Signal zur Schwellwertschaltung DTH, durch die festgestellt wird, ob ein Abfrageimpuls anliegt und von der ein entsprechendes Signal an die Steuereinheit CU abgegeben wird.

Zur Übertragung von Daten vd-b zur Abtragestation Q wird der Schalter SW derart gesteuert und die Impedanz IMP derart eingestellt, dass die Oberflächenwellen wahlweise bzw. nicht oder bezüglich Pulslänge und Amplitude nur teilweise reflektiert werden. in Fig. 4 ist beispielsweise ein Abtrageimpuls AFI gezeigt, der den Reflektoren RFT + 45; RFT-45 zugeführt wird, die derart betätigt werden, dass Anteile dieses Impulses AFI passieren und weitere Anteile (Antwortimpulse AWI1, ..., AWIn) reflektiert werden. Die in Fig. 4 gezeigten Antwortimpulse AWI1, ..., AWIn weisen beliebig gewählte zeitliche Abstände, Längen und Amplituden auf. Ferner sind die Phasenlagen der Antwortimpulse AWI1, ..., AWIn durch die Wahl des aktivierten Reflektors RFT + 45; RFT-45 beeinflusst. Der Antwortimpuls AWI2 könnte z.B. vom Reflektor RFT + 45 und der Antwortimpuls AWI4 könnte vom Reflektor RFT-45 reflektiert worden sein.

Zur Übertragung von Daten von der Antwortstation R1 zur Abfragestation Q können die reflektierten Signale ferner in einem Phasenmodulator in Abhängigkeit der zu übertragenden binären Daten z.B. zwischen mindestens zwei Phasenlagen (z.B. + /- 45° oder + /- 90°) umgetastet werden. (Phasenmodulatoren bzw. Demodulatoren werden z.B. in Herter/Röcker, Nachrichtentechnik - Übertragung und Verarbeitung, München 1976, Seiten 181 - 218 beschrieben. Als Phasenmodulator PM kann z.B. der auf Seite 202, Bild 2.4-27 gezeigte Ringmodulator verwendet werden. Phasenmodulationsverfahren sind ferner in R. Mäusl, Digitale Modulationsverfahren, Heidelberg 1991, Kapitel 3.3 und 3.4 beschrieben.) Für die Demodulation dieser phasenmodulierten Signale ist in der Abfragestation Q1 ein Referenzsignal vorzusehen, das jeweils für die Modulation des Abfragesignals und die Demodulation des Antwortsignals verwendet wird. Möglich ist ferner die Verwendung eines Pulses aus der Sequenz der Antwortpulse als Referenzsignal. Z.B. wird die Phasenlage des ersten Pulses der Sequenz nicht verändert. Die Phasenlage der nachfolgenden Pulse der Sequenz kann daher jeweils mit bezug auf den ersten Puls der Sequenz detektiert werden.

In Fig. 11 ist eine weitere Antwortstation R3 mit einem OFW-Bauteil OFW3 dargestellt, das einen Eingangs-Interdigitalwandler IDWi und zwei gegeneinander verschobene Ausgangs-Interdigitalwandler IDWa-1, IDWa-2 aufweist. Die Abfrageimpulse gelangen in dieser Antwortstation R3 von der Antenne A über den Ausgang OUT eines Zirkulators Cx, ein für die Bandbreite der Abfrageimpulse durchlässiges Bandfilter BF sowie einen Diplexer DX einerseits zu einer Gleichrichterstufe RECT und andererseits zum Eingangs-Interdigitalwandler IDWi und über das OFW-Bauteil OFW3 zu den Ausgangs-Interdigitalwandlern IDWa-1, IDWa-2, die über einen Schalter SWt1 mit dem Eingang INP des Zirkulator Cx verbunden sind. Die Ausgangs-Interdigitalwandler IDWa-1 und IDWa-2 sind auf dem Substrat um ein Viertel der Wellenlänge der Oberflächenwellen gegeneinander verschoben, so dass die davon abgegebenen Signale um 90° gegeneinander phasenverschoben sind. Von der Gleichrichterstufe RECT, die eine Versorgungsspannung Ub abgibt, gelangt ein gleichgerichtetes Signal zur Schwellwertschaltung DTH, durch die festgestellt wird, ob ein Abfrageimpuls anliegt und von der ein entsprechendes Signal an die Steuereinheit CU abgegeben wird, deren Ausgang mit dem Steuereingang des Schalters SWt1 verbunden ist. Die Ausgangs-Interdigitalwandler IDWa-1, IDWa-2 sind ferner, wie in Fig. 2 dargestellt, vorzugsweise mit einer Schaltung verbunden, die zur Detektion der übertragenen Daten vd-t geeignet ist.

Die Funktion der in Fig. 11 gezeigten Antwortstation wird anhand der in Fig. 4 beispielsweise gezeigten Verläufe eines Abfrageimpulses AFI und der korrespondierenden Antwortimpulse AWI1, ..., AWIn erläutert. Der dargestellte Abfrageimpuls AFI, der ein enges Frequenzspektrum aufweist, wird praktisch unverändert zum Eingangs-Interdigitalwandler IDWi. Durch das nur vorzugsweise eingesetzte Bandfilter BF werden lediglich Frequenzen gesperrt, die ausserhalb der Bandbreite der Abfrageimpulse AFI liegen. Über den Schalter SWt1, der von der Steuereinheit CU gesteuert ist, werden in Abhängigkeit der zu übertragenden Daten abschnittweise Anteile der von den Ausgangs-Interdigitalwandlern IDWa-1 und IDWa-2 abgegebenen phasenverschobenen Signale zum Eingang INP des Zirkulators Cx weitergeleitet. Die Sequenz der in Fig. 4 gezeigten Antwortimpulse AWI1, ..., AWIn setzt sich daher aus Pulsen zusammen, die bezüglich ihrer zeitlichen Position, Amplitude, Länge und Phasenlage moduliert sind. Falls nur ein Ausgangs-Interdigitalwandler IDWa-1 verwendet wird, entfällt die Phasenmodulierbarkeit.

Bei zwei oder mehreren parallel geführten Geleisen (siehe Fig. 3) besteht das einleitend beschriebene Problem, dass Abfrageimpulse von der Abfragestation Q1 nicht nur zu der zugehörigen Antwortstation R1 gelangen, sondern auch zu einer Abfragestation Qx, die sich auf Nachbargeleisen befindet. Umgekehrt können Abfrageimpulse von der Abfragestation Qx ebenfalls zur Abfragestation Q1 gelangen und sich den von der Antwortstation R1 zur Abfragestation Q1 übertragenen Antwortsignalen überlagern. Obwohl Störungen hauptsächlich durch die verhältnismässig starken Abfrageimpulse hervorgerufen werden, können auch Antwortsignale, die zu benachbarten Abfragestationen Qx gelangen oder von benachbarten Antworistationen Rx eintreffen, ebenfalls zu Störungen der Kommunikation führen. Erfindungsgemäss sollen diese beim Betrieb mehrerer Abfrage- und Antwortstationen auftretenden gegenseitigen Störungen vermieden werden. Zur Vermeidung von Störungen, die von fremden Abfrageimpulsen hervorgerufen werden, sind daher die nachfolgend genannten Verfahrensschritte vorgesehen :

Von der Abfragestation werden schmalbandige Abfragesignale zur Antwortstation ausgesandt, die Antwortsignale mit einem breiten Frequenzspektrum und zumindest annähernd derselben Mittenfrequenz retourniert. In der Empfangsstufe der Abfragestation werden Anteile der Antwortsignale unterdrückt, deren Frequenzen innerhalb des Frequenzspektrums der Abfrageimpulse liegen. Mit diesen Massnahmen können daher alle Signale unterdrückt, die von fremden Abfragestationen abgegeben werden, ohne dass die von der Antwort- zur Abfragestation übertragene Information verloren geht.

Von der Abfragestation Q1 wird dazu ein schmalbandiger Abfrageimpuls ausgesendet, dessen Frequenzspektrum in der Antwortstation R1 durch eine nichtlineare Schaltung aufgeweitet wird, wonach die derart modifizierten Abfrageimpulse über die Verzögerungsleitung an die Reflektoren RFT abgegeben werden. Von den Reflektoren RFT werden breitbandige Antwortimpulse reflektiert und über den Eingangs-Interdigitalwandler IDWi und die Antenne A zur Abfragestation Q1 übertragen. Durch das in der Empfangsstufe der Abfragestation Q1 vorgesehene Bandpassfilter BPF werden Signalanteile unterdrückt, deren Frequenzen im Bereich der unmodifizierten Abtrageimpulse liegen. Falls der Frequenzbereich der Abfrageimpulse symmetrisch aufgeweitet wird, was normalerweise der Fall ist, so ist der Sperrbereich des Bandpassfilters BPF im Zentrum des Frequenzbereichs der Antwortimpulse vorzusehen. Da die Antwortimpulse im Vergleich zu den Abfrageimpulsen ein verbreitertes Frequenzspektrum aufweisen, genügt der Signalanteil, der vom Bandpassfilter BPF nicht gesperrt wird, zur Detektion der Abfrageimpulse. Durch das Bandpassfilter BPF werden daher die Abfrageimpulse aller Abfragestationen Qx unterdrückt, die auf derselben Frequenz arbeiten wie die Abfragestation Q1. Störungen, die von fremden Abfragestationen Qx verursacht werden könnten, werden somit vermieden.

In Fig. 5a ist ein Abfrageimpuls im Zeitbereich dargestellt, wie er von der Abfragestation Q1 zur Antwortstation R1 übertragen wird. In Fig. 5b ist dieser schmalbandige Abfrageimpuls im Frequenzbereich dargestellt. In Fig. 5c ist ein modifizierter Abfrageimpuls dargestellt, der durch eine zeitliche Verkürzung des in Fig. 5a dargestellten Abfrageimpulses entstanden ist. Einfachheitshalber wird für diese Modifikation ein Schalter vorgesehen, der derart gesteuert wird, dass Signalanteile gesperrt werden, welche einen vorgesehenen Schwellwert nicht überschreiten. Der Schalter wird daher nur dann geschlossen, wenn der zentrale Teil des Abtrageimpulses eintrifft, der den Schwellwert überschreitet. Der Schwellwert, der entsprechend der gewünschten Verbreiterung des Frequenzspektrums beliebig wählbar ist, entspricht vorzugsweise etwa 2/3 der maximal auftretenden Signalamplitude. Fig. 5d zeigt das erweiterte Frequenzspektrum der modifizierten Abfrageimpulse bzw. der zur Abfragestation Q1 reflektierten Antwortimpulse. Fig. 5e zeigt das Frequenzspektrum der Antwortimpulse nach dem Durchlaufen des Bandpassfilters BPF in der Abfragestation Q1. Daraus ist ersichtlich, dass der zentrale Teil des Frequenzspektrums, welcher den Frequenzbereich der unmodifizierten Abfrageimpulse umfasst, durch das Bandpassfilter BPF gesperrt wird.

Alternativ kann der Abfrageimpuls auch in voller Länge zu einem auf einem OFW-Bauteil vorgesehenen Reflektor oder Interdigitalwandler übertragen werden, der derart aktiviert bzw. mit der Sende- und Empfangsantenne verbunden wird, dass Teile des Abfrageimpulses, welche die Antwortimpulssequenz bilden, zur Abfragestation Q1 reflektiert werden. Die derart erzeugten Antwortimpulse weisen im Vergleich zu den Abfrageimpulsen aus den obenerwähnten Gründen ebenfalls ein breiteres Frequenzspektrum auf und können in der Abfragestation Q1 nach dem Durchlaufen des Bandpassfilters BPF noch detektiert werden. Dieses Verfahren und die zugehörigen Antwortstation R lassen sich aufgrund der beschriebenen Vorteile auch vorteilhaft ohne die Verwendung des Bandpassfilters BPF einsetzen, das zur Unterdrückung fremder Abfrageimpulse eingesetzt wird.

Besonders vorteilhaft kann das erfindungsgemässe Verfahren auch bei der wechselseitigten Übertragung von Dauerstrichsignalen (CW-Signalen) eingesetzt werden. Die Trägersignale für die zu übertragenden Daten werden in der Abfrage- und der Antwortstation Q2 bzw. R2 derart moduliert, dass das von der Abfragestation Q2 abgegebene Summensignal ein kleineres Frequenzspektrum aufweist als das von der Antwortstation R2 abgegebene Summensignal. Dies wird vorzugsweise durch die Wahl einer entsprechenden Kodierung der Meldedaten in den Stationen Q2 und R2 erzielt. Vorzugsweise wird eine zweistufige Frequenzumtastung gewählt, bei der die Frequenz einer Schwingung zwischen definierten Werten geändert wird, die den logischen Zuständen "1" und "0" der zu übertragenden Daten zugeordnet sind. Die beiden Frequenzwerte für das Datensignal, das von der Abfrage- zur Antwortstation Q2 bzw. R2 zu senden ist, werden daher tiefer gewählt als die Frequenzwerte für das Datensignal, das von der Antwort- zur Abfragestation R2 bzw. Q2 zu senden ist.

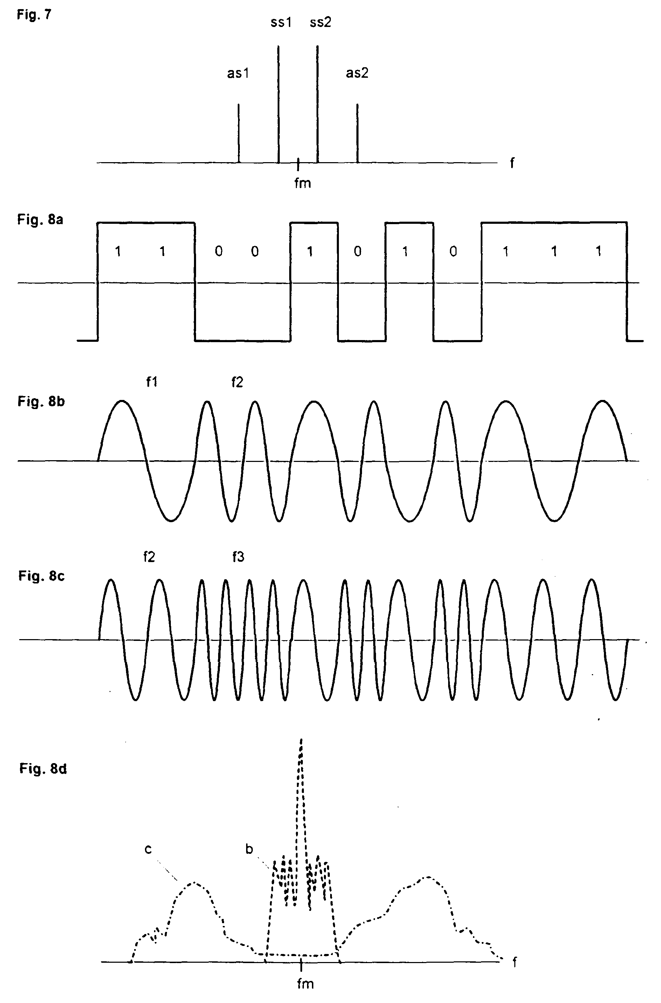

In Fig. 8a ist eine Serie von Datenbits dargestellt, die z.B. in den Stationen Q2 und R2 kodiert werden. Einfachheitshalber wird für beide Übertragungsrichtungen dieselbe Bitsequenz gewählt Die kodierten Signale sind in Fig. 8b für die Abfragestation Q2 und Fig. 8c für die Antwortstation R2 dargestellt. Das in der Abfragestation Q2 kodierte Signal wird zwischen den Frequenzen f1 und f2 und das in der Antwort-station R2 kodierte Signal wird zwischen den Frequenzen f2 und f3 umgetastet. Die Frequenzen f1, f2 und f3 werden zudem viel Meiner gewählt als die Frequenz Im der Trägerschwingung (f1, ..., f3 < < fm), die mit den kodierten Signalen amplitudenmoduliert wird. Von der Abfragestation Q2 wird z.B. eine Trägerschwingung der Frequenz von 850 MHz erzeugt, die mit einem Datensignal moduliert wird, das zwischen den Frequenzen 75 kHz und 125 kHz umgetastet wird. Das Trägersignal wird vorzugsweise mit einer Leistung (z.B. 1 W) abgegeben, die so gross ist, dass daraus in der Antwortstation R2 durch Gleichrichtung und Siebung eine Speisespannung (s. Fig. 2. Spannung Ub) gewonnen werden kann. Ferner wird in der Antwortstation R2 vorzugsweise die Trägerschwingung des Abfragesignals zurückgewonnen und mit dem zu übertragenden Datensignal moduliert, das zwischen den Frequenzen 175 kHz und 225 kHz umgetastet wird. Das Trägersignal kann vor der Übertragung zur Abfragestation Q2 auch unterdrückt werden. Typische Frequenzspektren der dadurch gebildeten Abtrage- (s. Fig. 8d, Linie b) und Antwortsignale (s. Fig. 8d, Linie c) sind in Fig. 8d dargestellt. Daraus geht hervor, dass das Antwortsignal im Spektralbereich des Abfragesignals eine sehr Meine Leistungsdichte aufweist. In der Abfragestation Q2 kann daher der in diesem Spektralbereich liegende Signalanteil gesperrt werden, ohne dass die Übertragung der Daten von der Antwort- zur Abfragestation gestört wird.

Die zu übertragenden Daten können auch einem Signalprozessor zugeführt werden, der eine kodierte Schwingung abgibt, die glatte Übergänge zwischen Signalanteilen unterschiedlicher Frequenz aufweisen. Durch dieses verschleifen der Frequenzübergänge erreicht man ein Absenken der Nebenmaxima im Leistungsspektrum. Die Frequenzumtastung eines Sinusträgers ist u.a. in R. Mäusl, Digitale Modulationsverfahren, Heidelberg 1991, Kapitel 3.5 beschrieben.

Die zwischen den beiden Stationen Q2; R2 zu übertragenden Daten können auch von einem "non-return-to-zero"- in ein "return-to-zero"-Format gewandelt und einem Signalgenerator (SG) zugeführt werden, dessen Ausgangssignal in Abhängigkeit des zugeführten Datensignals zwischen zwei Frequenzen umgetastet wird. Die beiden Frequenzwerte werden für die Abfragestation (Q2) mit geringerem Abstand gewählt als für die Antwortstation (R2). Das "return-to-zero"-Format (beschrieben in P. Bocker, Datenübertragung, Springer-Verlag, Berlin 1978, Seite 23) wird verwendet, damit zwischen den einzelnen Umtastvorgängen unerwünschte zeitliche Abstände entstehen, durch die die Frequenzspektren unzulässig geändert werden.

Durch das oben beschriebene Verfahren werden wesentliche Störungen beseitigt, die beim gleichzeitigen Betrieb von mehreren Abfrage- und Antwortstationen auftreten können. Von grosser Bedeutung sind jedoch auch Probleme die aufgrund des nachstehend beschriebenen Sachverhalts entstehen.

Insbesondere bei der Kommunikation mit passiven Antwortstationen, die die Abfragesignale unverstärkt reflektieren, werden Abfragesignale mit hoher Intensität ausgestrahlt, um sicherzustellen, dass eine ungestörte Kommunikation auch bei ungünstigen Übertragungsverhältnissen gewährleistet ist Starke Abtragesignale sowie demzufolge bei guten Übertragungsverhältnissen entstehende starke Antwortsignale können jedoch Störungen u.a. auch in weiteren Funkgeräten hervorrufen.

In der in Fig. 1 dargestellten Abfragestation Q1 wird das störende Übersprechen von Abfrage- und Antwortstationen zu fremden Stationen und Funkgeräten durch die nachfolgend beschriebenen Massnahmen weiter reduziert. Erfindungsgemäss wird dazu die Intensität der eintreffenden Antwortsignale vom Detektor DET in der Abfragestation Q1 kontinuierlich gemessen und mit einem festgelegten Maximalwert verglichen. Antwortsignale, die diesen Maximalwert erreichen, lassen sich dabei einwandfrei weiterverarbeiten. Ein Überschreiten dieses Maximalwertes durch die Antwortsignäle führt daher nicht zu einer Verbesserung der Übertragungsqualität. Vom Detektor DET wird ein von der gemessenen Signalintensität abhängiges Signal agc an den Steuereingang des Regelverstärkers RA1 abgegeben, durch das der Verstärkungsfaktor derart geregelt wird, dass die Intensität der eintreffenden Antwortsignale niemals den festgelegten Maximalwert überschreitet. Die Intensität der Abfrage- und Antwortsignale wird daher immer auf einem minimalen Wert gehalten, bei dem die Verarbeitung der Antwortsignale in der Abfragestation Q1 noch einwandfrei möglich ist.

Während der Zeit, in der die Abfrage- und Antwortstationen nicht miteinander in Kontakt stehen, (Zeitanteil durchschnittlich weit über 99%) sendet die Abfragestation jedoch mit maximaler Leistung und Reichweite. Dies führt dazu, dass die Sendeendstufe für eine hohe Dauer-Sendeleistung ausgelegt werden muss, die durch den Gesetzgeber allenfalls nicht zugelassen ist und zu Störungen in weiteren Funknetzen führen kann. Diese Probleme können erfindungsgemäss vermieden werden, indem die Sendeleistung im kommunikationsfreien Betrieb derart reduziert wird, dass sichergestellt bleibt, dass bei der Annäherung an eine Antwortstation Antwortsignale ausgelöst werden, die mit genügend hoher Sicherheit detektiert werden können. Bei der Detektion der ersten Antwortsignale wird die Sendeleistung hochgefahren bis die Datenübertragung zwischen den beiden Stationen Q und R abgeschlossen ist. Danach, wenn vorzugsweise innerhalb einer festgelegten Zeitdauer keine Antwortsignale mehr auftreten, wird die Sendeleistung wieder reduziert. Dadurch gelingt es, die Sendeleistung bis auf sehr kurze Zeitabschnitte (Zeitanteil normalerweise weit unter 1%) auf ein Minimum zu reduzieren. Schaltungsmässig erfolgt die Steuerung der Sendeleistung z.B. in der Abfragestation Q1 wiederum durch die Steuerleitung AGC, welche den Detektor DET (bzw. Signalprozessor, falls verwendet) mit dem Steuereingang des Regelverstärkers RA1 verbindet. Bevorzugt werden die beiden oben beschriebenen Verfahren in Kombination miteinander angewendet. D.h., nach dem Hochfahren der Sendeleistung wird diese während der normalerweise bidirektionalen Datenübertragung wieder reduziert, falls die Intensität der Antwortsignale den Maximalwert überschreitet. Diese Verfahren zur Steuerung der Sendeleistung sind auch vorteilhaft einsetzbar, falls Abfrage- und Antwortstationen verwendet werden, die nicht mit OFW-Bauteilen oder weiteren Verzögerungsleitungen versehen sind.

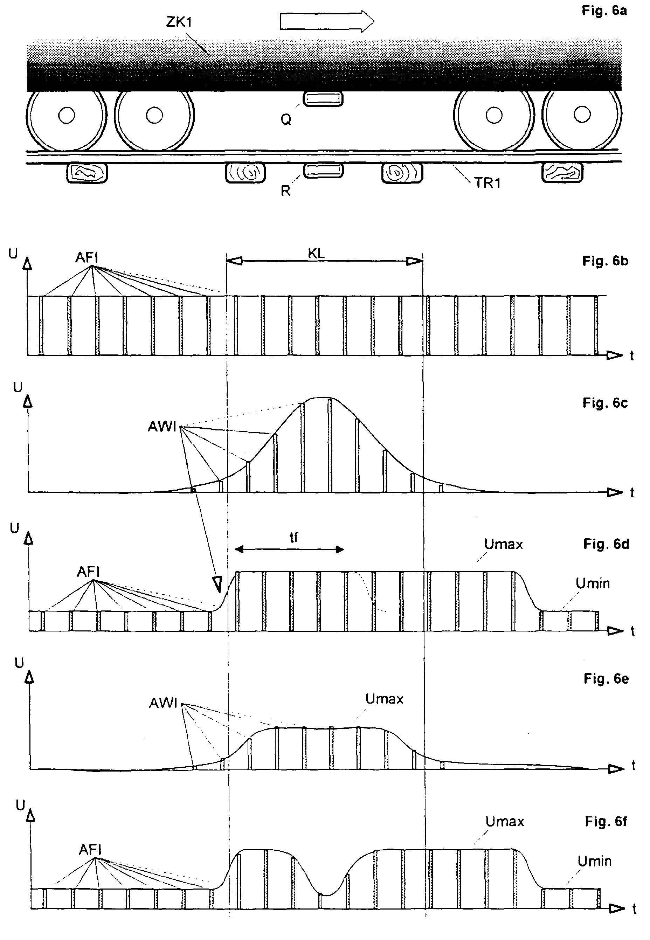

In Fig. 6a ist eine mit einer Zugskomposition ZK1 versehene Abfragestation Q dargestellt, die sich z.B. mit 100 km/h an einer Antworistation R vorbeibewegt, die zur Reflektion der Abfrageimpulse AFI vorgesehen ist. Die Länge KL, auf der die Stationen Q und R in Kontakt sind, beträgt daher nur einige Meter. Falls die Abfragestation Q, wie in Fig. 6b dargestellt, Abfrageimpulse AFI mit über den gesamten Zeitbereich konstanter Amplitude aussendet, werden von der Antwortstation R die in Fig. 6c gezeigten Antwortimpulse AWI abgegeben, die einen Maximalwert annehmen, wenn die Stationen Q und R senkrecht übereinander stehen. Solange sich die Abfragestation Q innerhalb der Kontaktlänge KL befindet, muss der gesamte Datentransfer vollzogen werden, da nur darin eine gute Übertragungsqualität gewährleistet ist. Abfrageimpulse AFI, die weit vor oder nach dieser Zone mit voller Sendeleistung abgegeben werden, dienen daher nicht mehr der Kommunikation mit der Antwortstation R, sondern führen allenfalls zu Störungen in Stationen, die auf Nachbargeleisen vorgesehen sind. Erfindungsgemäss wird, wie in Fig. 6d gezeigt, die Sendeleistung stark abgesenkt und erst erhöht, wenn ein erster von der Antwortstation R abgegebener Antwortimpuls AWI detektiert wird. Nachdem eine bestimmte Anzahl von Antwortimpulsen AWI (nach Abschluss der Kommunikation) ausgeblieben ist, wird die Sendeleistung wieder abgesenkt. Falls die maximale Dauer der Datenübertragung bekannt ist, kann die Sendeleistung auch nur für diese Zeit (s. Fig. 6d, Zeitdauer tf) erhöht werden. Das Anheben und Absenken der Sendeleistung erfolgt praktisch ohne Verzögerung von einem Abfrageimpuls AFI zum andern. Bis auf den ersten Antwortimpuls AWI, der zur Anhebung der Sendeleistung dient, korrespondieren auch die in Fig. 6d gezeigten Abfrageimpulsen AFI zu den in Fig. 6c gezeigten Antwortimpulsen AWI. Der erste Antwortimpuls AWI ist entsprechend der abgesenkten Sendeleistung reduziert. In Fig. 6f ist die Sendeleistung zusätzlich derart geregelt, dass die in Fig. 6e gezeigten Antwortimpulse AWI einen festgelegten Maximalwert nicht überschreiten. Dadurch werden sowohl die Antwortimpulse AWI als auch die Abfrageimpulse AFI bezüglich ihrer Amplitude reduziert. Da das Verhältnis der Kontaktlänge KL zur Streckenlänge zwischen zwei Antwortstationen sehr gross ist (normalerweise etwa Faktor 1000), werden gegenseitige Störungen der Abfrage- und Antwortstationen durch die oben angegebenen Massnahmen weitgehend beseitigt. Die in Fig. 6f angegebenen Leistungspegel werden vorzugsweise in Abhängigkeit der Übertragungsbedingungen gewählt. Falls die Antwortstation R z.B. durch Schneeschichten bedeckt sind, sind gegebenenfalls höhere Leistungspegel zu wählen. Vorzugsweise sollten daher mehr als zwei Leistungspegel zur Verfügung stehen.

In Fig. 6 ist die Regelung der Sendeleistung für gepulste Signale gezeigt. Die erfindungsgemässe Idee ist jedoch auch für Dauerstrichsignale in analoger Weise anwendbar. Nachfolgend wird beschrieben wie zuerst leistungsschwache (Dauerstrich-) Suchsignale ausgesendet werden, die nach Kontaktaufnahme mit einer Antwortstation durch leistungsstarke Abfrage- und gegebenenfalls Stromversorgungssignale abgelöst werden.

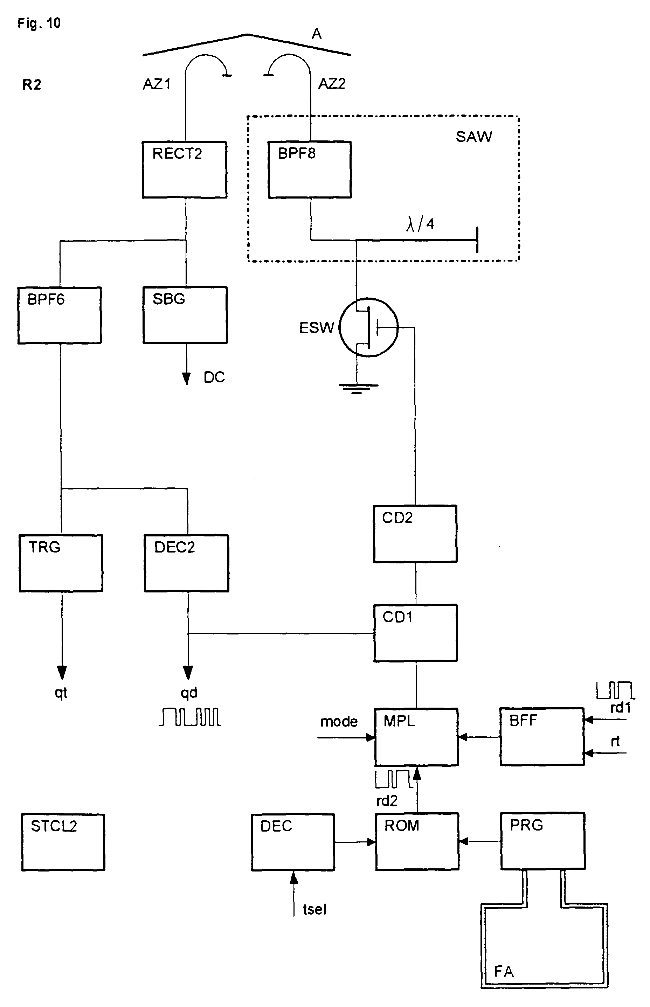

Um die ersten Antwortsignale bei der Annäherung an eine Antwortstation R leicht detektieren zu können, wird vorzugsweise ein Suchsignal relativ geringer Leistung mit zwei Frequenzlinien (Fig. 7, ss1 und ss2) ausgesandt, die z.B. symmetrisch in einem Abstand von 50 kHz zur Frequenz fm des (unterdrückten) Trägersignals angeordnet sind. Z.B. durch den in der Antwortstation R vorgesehenen Stromversorgungsgleichrichter (s. Fig. 2, RECT. Fig. 10, RECT2) wird das empfangene Signal nichtlinear verzerrt, wodurch eine Intermodulation entsteht. Dadurch werden zwei zusätzliche Spektrallinien (Fig. 7, as1 und as2) erzeugt, welche in der Abfragestation Q leicht detektiert werden können. Die von der Umgebung reflektierten Signale weisen keine zusätzliche Spektrallinien auf. In Fig. 7 sind die Suchsignale ss1, ss2 mit den in der Antwortstation R entstandenen Detektionssignalen as1, as2 dargestellt. Besonders vorteilhaft bei diesem Suchverfahren ist, dass Suchsignale ss mit geringer Leistung ausgestrahlt werden können und dass die gegebenenfalls entstehenden Detektionssignale as1, as2 trotzdem einfach und sicher detektiert werden können. Nach der Detektion der Signale as1, as2 wird in der Abfragestation Q die Abfrage eingeleitet. Mit erhöhter Leistung wird nun das Abfragesignal abgegeben, das vorzugsweise aus einer leistungsstarken Trägerschwingung zur Energieversorgung der Antwortstation R und einem Datensignal besteht.

Der beschriebene Such- und der Abfragemodus werden bevorzugt sequentiell miteinander verknüpft. Möglich ist jedoch auch die voneinander unabhängige Anwendung.

Falls trotz der oben beschriebenen Massnahmen Signale fremder Stationen in der Eingangsstufe der Abfragestation Q nicht unterdrückt werden können, muss sichergestellt werden, dass die darauf eingeprägten Daten nach einer Prüfung verworfen werden. In Fig. 3 sind auf zwei auf parallelen Geleisen TR1, TR2 zwei Züge ZK1, ZK2 geführt. Der Zug ZK1 weist dabei die Serienummer SN-0001 und der Zug ZK2 weist die Serienummer SN-0002 auf. Beim ersten Geleise TR1 ist die Antwortstation R1 vorgesehen, die von der im Zug ZK1 vorgesehenen Abfragestation Q1 mit Abfragesignalen beaufschlagt wird. Falls die Antwortsignale trotz der oben beschriebenen Massnahmen von der Antwortstation R1 zu einer im Zug ZK2 vorgesehenen Abfragestation Qx gelangen sollten, könnten fehlerhafte Kommandos zum Führer des Zuges ZK2 gelangen. Es ist daher wesentlich, dass nur die Informationen der Signale, die von einer zugehörigen Antwortstation R stammen, in der Abfragestation Q verarbeitet werden.

Dazu wird jedes Abfragesignal mit einer für den betreffenden Zug ZK bzw. für jede Abfragestation Q individuellen Modulation versehen. Z.B. könnte die Modulation von der Serienummer der Lokomotive, einem Kodewort oder vorzugsweise von den aufgeprägten Meldedaten abgeleitet werden. Durch die Korrelation der von der Antwortstation R reflektierten Antwortsignale mit diesem Kodewort kann in der ersten oder zweiten Abfragestation Q1 bzw. Qx daher leicht festgestellt werden, ob die empfangenen Signale zu den eigenen Abfragesignalen korrespondieren und weiterverarbeitet oder unterdrückt werden sollen. Z.B. wird das empfangene Signal mit einem erwarteten Signal, das in einem Speicher vorliegt korreliert. Falls das daraus resultierende Signal einen vorgesehen Schwellwert überschreitet, wird das Signal weiterverarbeitet. Vorteilhaft können dazu die Antwortdaten, die von der Abfrage- zur Antwortstation gesendet werden, vor und nach der Übertragung mit den Abfragedaten EXOR-verknüpft werden. Durch eine einmalige EXOR-Verknüpfung werden die Antwortdaten in eine Bitsequenz mit Checksummenfehler umgewandelt. Erst durch die zweite EXOR-Verknüpfung, die nach der Übertragung in der Abfragestation Q erfolgt, werden die Antwortdaten wieder korrekt erstellt. Durch das Überprüfen der Checksumme wird sichergestellt, dass die Antwortdaten korrekt übermittelt wurden und von der zugehörigen Antwortstation stammen. Die Abfragedaten müssen zu diesem Zweck immer gleichzeitig mit den Antwortdaten dem Exklusiv-ODER-Tor in der Antwort- bzw. in der Abtragestation R bzw. Q zugeführt werden. Falls bekannt ist, um wieviele Takte die Abfragedaten auf den Übertragungswegen und in der Antwortstation R, in der die erste EXOR -Verknüpfung erfolgt, verzögert werden, so können die Abfragedaten in der Abfragestation Q um dieselbe Zeit verzögert werden. Z.B. können die Abfragedaten in Register eingeschrieben und beim Eintreffen der Antwortdaten oder nach Ablauf der Zeitverzögerung wieder ausgelesen werden.

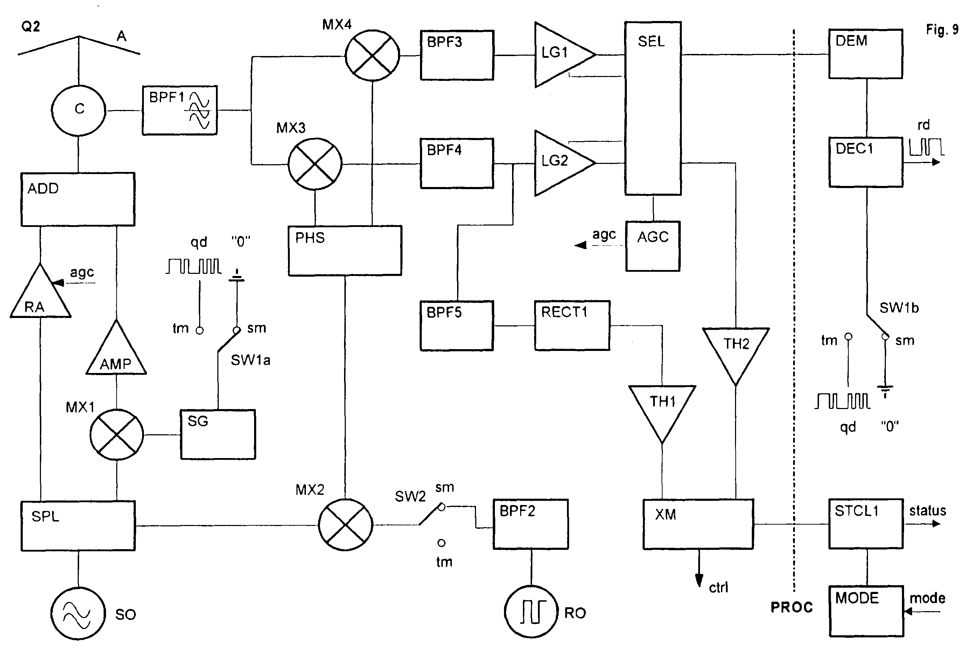

In Fig. 9 ist eine zweite Abfragestation Q2 dargestellt, die zur Durchführung der oben beschriebenen Verfahrensschritte geeignet ist. Die Abfragestation Q2 wird dabei entweder im Such- oder im Abfragemodus betrieben. Im Suchmodus sollen die in Fig. 7 gezeigten Suchsignale ss1, ss2 abgegeben und die gegebenenfalls empfangenen Intermodulationssignale as1, as2 detektiert werden. Von einem Oszillator SO wird dazu eine Trägerschwingung der Frequenz fm erzeugt, die über einen Signalteiler SPL einem ersten Eingang einer Mischstufe MX1 zugeführt wird, deren Ausgang über einen Verstärker AMP, eine Addierstufe ADD und eine Antennenweiche C (Zirkulator) mit der Antenne A verbunden ist. Der zweite Eingang der Mischstufe MX1 ist mit einem Signalgenerator SG (z.B. einem Direkt Digitalen Synthesizer DDS oder einem Signalprozessor) verbunden, der im Suchmodus sm eine Frequenz f1 abgibt und im Abfragemodus tm in Abhängigkeit der Abfragedaten qd zwischen zwei Frequenzen f1, f2 umgeschaltet wird. Symmetrisch zur Trägerschwingung fm entstehen in der Mischstufe MX1 daher die Suchsignale ss1, ss2 (die Trägerschwingung wird vor der Abgabe vorzugsweise unterdrückt). Der in Fig. 9 dargestellte Regelverstärker RA2 ist im Suchmodus sm nicht in Betrieb.

Reflektierte (Detektions-) Signale as1, as2 gelangen im Suchmodus über die Antennenweiche C, ein Bandpassfilter BPF1, eine Mischstufe MX3, zwei Bandpassfilter BPF4, BPF5 und einen Gleichrichter RECT1 zu einer Schwellwertschaltung TH1, die über eine Übertragungseinheit XM mit einer Steuereinheft STCL verbunden ist. Der zweite Eingang der Mischstute MX3 ist über einen Phasenschieber PHS mit einer Mischstufe MX2 verbunden, der einerseits die Trägerschwingung fm und andererseits über einen Schalter SW2 ein tieffrequentes Signal fo eines Oszillators RO zugeführt werden. Im Bandpassfilter BPF1 werden eigene oder fremde Signale unterdrückt, die nahe bei der Frequenz fm der Trägerschwingung bzw. im Spektralbereich der Abfragesignale liegen. In der Mischstufe MX3 werden die empfangenen Signale mit dem Ausgangssignal (fm+- fo) der Mischstufe MX2 gemischt, das derart gewählt ist, dass die Detektionssignale as1, as2 am Ausgang der Mischstufe MX3 im Zwischenfrequenz-Bereich liegen und die tiefste Frequenz aller Signale des entstehenden Signalgemisches aufweisen. Falls die Eingangssignale statt dessen mit der Frequenz fm des Oszillators SO gemischt würden, stehen die Detektionssignale as1, as2 deckungsgleich mit der gegebenenfalls vorhandenen 3. Harmonischen des Suchsignals ss. Durch die getroffenen Massnahmen wird daher verhindert, dass durch Verzerrungen des Suchsignals ss im Empfangspfad bzw. durch daraus resultierende Intermodulationen eine fehlerhafte Detektionsmeldung ausgelöst wird. Die Suchsignale ss und allfällige Intermodulationen können daher leicht ausgefiltert und somit von den Detektionssignalen as getrennt werden. In den Bandpassfiltern BPF4, BPF5 erfolgt eine breit- und eine schmalbandige Filterung, bevor die Signale im Gleichrichter RECT1 logarithmisch gleichgerichtet und von der Schwellwertschaltung TH1 mit einem Schwellwert verglichen werden. Die gegebenenfalls auftretende Identifikation von Detektionssignalen as1, as2 bzw. Signalen, die den Schwellwert überschreiten, wird von der Schwellwertschaltung TH1 z.B. über eine Übertragungseinrichtung an eine vorzugsweise in einem Prozessor PROC realisierte Zustandssteuerung STCL gemeldet, welche anschliessend den Abfragevorgang auslöst. Im Suchmodus sm wird daher bevorzugt das oben beschriebene Heterodyn-Prinzip angewendet.

Im Abfragemodus gibt der Oszillator SO über den Regelverstärker RA2 ein unmoduliertes und über die Mischstufe MX1 sowie den Verstärker AMP ein moduliertes Signal der Trägerfrequenz fm über die Addierstufe ADD und die Frequenzweiche C an die Antenne A ab. Der Regelverstärker RA2 wird durch eine Regelstufe AGC dabei derart gesteuert, dass das Antwortsignal einer z.B. in Fig. 10 gezeigten Antwortstation R2 einen definierten Maximalwert nicht überschreitet. Durch die Inbetriebnahme des Regelverstärkers RA2 wird im übrigen die oben beschriebene Erhöhung der Sendeleistung während der Kommunikation mit der Antwortstation R2 bewirkt. Der Mischstufe MX1 werden durch den Signalgenerator FSK (frequency shift keying) - oder MSK (minimum shift keying) - bzw. biphase-sinus kodierte Meldedaten zugeführt. Das MSK-Verfahren ist z.B. in R. Mäusl, Digitale Modulationsverfahren, Heidelberg 1991, Kapitel 3.5 beschrieben (s. Bild 3.38).

Die Antwortsignale von der Antwortstation R2 werden von der Antenne A über das Bandpassfilter BPF1 den Mischstufen MX3 und MX4 zugeführt, denen zwei um 90° phasenverschobene Signale der Frequenz fm zugeführt werden. Durch die Anwendung des Homodyn-Prinzips im Abfragemodus tm werden die übertragenen Antwortdaten von den Mischstufen MX3 und MX4 nicht im Zwischenfrequenzbereich, sondern direkt im Basisband über logarithmische Verstärker LG1, LG2 an eine Auswahllogik SEL abgegeben. Logarithmische Verstärker werden vorzugsweise deshalb gewählt, weil die Eingangssignale bei der vorliegenden Anwendung sehr grosse Pegelunterschiede aufweisen können.

Die von den Mischstuten MX3 und MX4 abgegebenen Antwortdaten sind in Phase zueinander; jedoch ist deren Amplitude mit dem Cosinus des Empfangsphasenwinkels multipliziert. Dass bedeutet, dass je nach Phasenwinkel (Abstand der Antennen A der Stationen Q2 und R2) die Signale abwechslungsweise Null werden und ihre Vorzeichen wechseln. Die Auswahllogik SEL wählt nun stets das stärkere der beiden Signale, korrigiert den Vorzeichenwechsel und gibt das gewählte und korrigierte Signal über einen Demodulator DEM an einen Dekoder DEC1 ab. Der Demodulator DEM und der Dekoder DEC1 sowie die Zustandssteuerung STCL und ein Betriebsartenwähler MODE sind vorzugsweise innerhalb eines Prozessors PROC integriert. Dem Dekoder DEC1 werden ferner für die zweite oben beschriebene EXOR-Verknüpfung die Abfragedaten zugeführt, so dass vom Dekoder DEC1 die dekodierten Antwortdaten abgegeben werden.

Vorzugsweise ist ferner eine weitere Schwellwertschaltung TH2 vorgesehen, durch die geprüft wird, ob die empfangenen Antwortdaten rd einen festgelegten Schwellwert überschreiten und zur Weiterverarbeitung geeignet sind. Das Ergebnis dieser Prüfung wird daher der Zustandssteuerung STCL mitgeteilt. Die Auswahllogik ist ferner mit einer Regelschaltung AGC verbunden, welche ein von der gemessenen Signalintensität der Antwortdaten rd abhängiges Regelsignal an den Regelverstärker RA2 abgibt.

Die in Fig. 10 gezeigte Antwortstation R2 weist eine Antenne A mit zwei Ankopptungsteitungen AZ1, AZ2 auf. Über die erste Ankopplungsleitung AZ1 werden die Abfragesignale einer Gleichrichterstufe RECT2 zugeführt, durch die Detektionssignale as1, as2 erzeugt und über die Antenne A abgegeben werden. Vom Ausgang der Gleichrichterstufe RECT2 werden die gleichgerichteten Signale einer Siebschaltung SBG und andererseits über ein Bandpassfilter BPF6 einem Taktregenerator TRG sowie einem Dekoder DEC2 zugeführt wird. Von der Siebschaltung SBG wird dabei die Versorgungsspannung für die Antwortstation R2 abgegeben. Der Taktregenerator TRG erzeugt das Taktsignal zu den vom Dekoder DEC2 abgegebenen Abfragedaten qd, die einer Kodierstufe CD1 zugeführt werden, in der die erste EXOR-Verknüpfung der Antwortdaten rd mit den Abfragedaten qd wie oben beschrieben erfolgt. Die Antwortdaten rd werden dabei entweder aus einem Speicherbaustein ROM oder aus einem Datenpuffer BFF ausgelesen und über einen Multiplexer MPL der Kodierstufe CD1 zugeführt. Der Speicherbaustein ROM ist vorzugsweise am Installationsort der Antwortstation R2 programmierbar. Dazu wird vorzugsweise ein Programmiergerät PRG vorgesehen, dem über eine Rahmenantenne FA die zu speichernden Daten rd2 zuführbar sind. Normalerweise wird dadurch im Speicherbaustein ROM eine Anzahl von Telegrammen abgelegt, von denen eines über eine Leitung tsel und einen Dekoder DEC3 auswählbar ist. In der Kodierstufe CD2 werden die von der Kodierstufe CD1 abgegebenen Daten vorzugsweise nach dem MSK (minimum shift keying) - Verfahren moduliert und dem Steuereingang eines Schalttransistors ESW zuführt, durch dessen Ausgang eine z.B. auf einem Oberflächenwellen-Bauteil SAW vorgesehene λ/4 - Leitung, die einerseits mit der Ankopplungsleitung AZ2 und andererseits mit Erde verbunden ist, kurzschliessbar ist. Dadurch kann die Ankopplungsleitung AZ2 in Abhängigkeit der Antwortdaten um die λ/4 - Leitung verlängert werden. Signale, die die λ/4 - Leitung zweimal durchlaufen (vor und zurück) werden gegenüber Signalen, die bei kurzgeschlossener λ/4 - Leitung am Ende der Ankopplungsleitung AZ2 reflektiert werden, um 180° in der Phase gekehrt. Die λ/4 - Leitung ist dabei vorzugsweise über ein Bandpassfilter BPF8 mit der zweiten Ankopplungsleitung AZ2 verbunden. Die Trägerfrequenz des Abfragesignals wird daher über den zweiten Ankopplungszweig AZ2 übertragen, mittels der geschalteten λ/4 - Leitung vorzeichenmoduliert und zurück über die Antenne A zur Abfragestation Q2 übertragen. In der Antwortstation R2 ist ferner eine Zustandssteuerung STCL2 vorhanden, durch die alle Abläufe, insbesondere die zeitrichtige EXOR-Verknüpfung, gesteuert werden. Das Bandpassfilter BPF8 weist eine breite Durchlasskurve auf, damit die beschriebenen Antwortsignale (s. Fig. 8d) zur Abfragestation Q1 übertragen werden können. Weitere Modulationsverfahren sowie die Wahl entsprechender Frequenzen zur Realisierung der vorstehend beschriebenen Erfindung können in fachmännischer Weise festgelegt werden.

## Patentansprüche

1. Verfahren zur Datenübertragung zwischen Abfrage- und Antwortstationen (Q, R), die zum Empfang und zur Abgabe trägerfrequenter Signale vorgesehen sind, **dadurch gekennzeichnet**, dass von der Abfrage- an die Antwortstation (Q; R) Abfragesignale gesandt werden, deren Frequenzspektrum innerhalb des Frequenzspektrums der Antwortsignale liegt, die von der Antwort- an die Abfragestation (R; Q) übertragen werden, dass im Empfangsteil der Abfragestation (Q) Signalanteile von empfangenen Signalen gesperrt werden, deren Frequenzen innerhalb des Frequenzspektrums der Abfragesignale liegen und dass die verbleibenden Signalanteile gegebenenfalls empfangener Antwortsignale, in denen die von der Antwort- an die Abfragestation (R; Q) übertragene Information vollständig enthalten ist, falls die Qualität der Übertragungswege den gestellten Anforderungen entspricht, in der Abfragestation (Q) weiterverarbeitet werden.

2. Verfahren nach Anspruch 1, **dadurch gekennzeichnet**, dass die Frequenzspektren der Abfrage- und Antwortsignale durch entsprechende Modulation der vorhandenen Trägersignale erzielt werden, welche zumindest annähernd die gleiche Trägerfrequenz aufweisen und dass diese entsprechende Modulation insbesondere durch die Kodierung der zu übertragenden Daten nach einem FSK-, MSK- oder PSK-Verfahren erzielt wird.

3. Verfahren nach Anspruch 2, **dadurch gekennzeichnet**, dass die zwischen den beiden Stationen (Q; R) zu übertragenden Daten von einem "non-return-to-zero"- in ein "return-to-zero"-Format gewandelt und einem Signalgenerator (SG) zugeführt werden, dessen Ausgangssignal in Abhängigkeit des zugeführten Datensignals zwischen zwei Frequenzen umgetastet wird, deren Werte für die Abfragestation (Q) mit geringerem Abstand gewählt werden, als die für die Antwortstation (R) vorgesehenen Frequenzwerte und dass die Trägersignale mit den derart kodierten Signalen moduliert werden.

4. Verfahren nach Anspruch 1, **dadurch gekennzeichnet**, dass die Antwortstation (R1) wenigstens eine Verzögerungsleitung, vorzugsweise ein OFW-Bauteil (OFW) aufweist, das mit einem zur Leitung von Oberflächenwellen geeigneten Substrat versehen ist, auf dem wenigstens ein Eingangs-Interdigitalwandler (IDWi) sowie mindestens ein Reflektor (RFT) und/oder mindestens ein Ausgangs-Interdigitalwandler (IDWa) vorgesehen ist, dass von der Abfrage- an die Antwortstation (Q1; R1) schmalbandige Abfrageimpulse übertragen werden, die in der Antwortstation (R1) derart modifiziert werden, dass das Frequenzspektrum der modifizierten Abfrageimpulse zumindest teilweise ausserhalb des Frequenzbereichs der unmodifizierten Abfrageimpulse liegt, dass die Abfrageimpulse über den Eingangs-Interdigitalwandler (IDWi) dem OFW-Bauteil (OFW) zugeführt und zur Abfragestation (Q1) reflektiert werden.

5. Verfahren nach Anspruch 4, **dadurch gekennzeichnet**, dass die Änderung des Frequenzspektrums der unmodifizierten Abfrageimpulse in der Antwortstation (R) erzielt wird, indem Signalanteile der Abfrageimpulse unterdrückt werden, deren Intensität nicht oberhalb eines festgelegten Schwellwertes liegt oder indem die unveränderten Abfrageimpulse zu mindestens einem wahlweise aktivierbaren Reflektor (RFT + 45; RFT-45) oder zumindest zu einem mit der Antenne (A) wahlweise verbindbaren Ausgangs-Interdigitalwandler (IDWa-1, IDWa-2) geführt werden, durch die in Abhängigkeit von den zu übertragenden Daten Abschnitte der Abfrageimpulse zur Abfragestation (Q) reflektiert werden.

6. Verfahren nach Anspruch 4, **dadurch gekennzeichnet**, dass entsprechend den zu übertragenden Daten (vd-t: vd-b) die unmodifizierten Abfrageimpulse in der Abfragestation (Q) phasen- und/oder die Antwortimpulse in der Antwortstation (R) positions-, längen-, phasen- und/oder amplitudenmoduliert werden und dass die übertragenen Signale in der Empfangsstufe der Antwortstation (R) bzw. der Abfragestation (Q) demoduliert werden und/oder dass die Antwortimpulse wahlweise von einem von zwei gegeneinander verschobenen Ausgangs-Interdigitalwandlern (IDWa-1, IDWa-2) zur Antenne (A) durchgeschaltet werden oder dass Abschnitte der Abfrageimpulse durch einen von zwei gegeneinander verschobenen, wahlweise aktivierbaren Reflektoren (RFT + 45; RFT-45) zurück zur Antenne (A) reflektiert werden.

7. Verfahren nach Anspruch 6, **dadurch gekennzeichnet**, dass die phasenmodulierten Abfrageimpulse in der Antwortstation (R1) dem ersten Eingang je einer Mischstufe (MX-1; MX-Q) und als Referenz über das Oberflächenwellen-Bauteil (OFW), verzögert um die Periodendauer der Abfrage-Pulsrepetitionsfrequenz, an zwei gegeneinander verschobene Ausgangs-Interdigitalwandler (IDWa-1, IDWa-2) abgegeben wird, welche zwei um 90° gegeneinander phasenverschobene Signale dem zweiten Eingang der Mischstufe (MX-1 bzw. MX-Q) zuführen und dass die in den Mischstufen (MX-1, MX-Q) gemischten Signale je einem Eingang eines Phasendetektors (PD) zugeführt werden.

8. Verfahren nach einem der vorhergehenden Ansprüche, **dadurch gekennzeichnet**, dass jede Abfragestation (Q) mit zeitlichen Abständen Tp periodisch Abfrageimpulse oder Sequenzen von Abfrageimpulsen an eine zugeordnete Antwortstation (R) aussendet, die individuell verschieden, vorzugsweise entsprechend einem Kodewort moduliert und mit den empfangenen Signalen korreliert werden und dass nur diejenigen empfangenen Signale weiterverarbeitet werden, die mit den ausgesendeten Signalen korrelieren.

9. Verfahren nach einem der vorhergehenden Ansprüche, **dadurch gekennzeichnet**, dass die von der Antwort- zur Abfragestation (R, Q) zu übertragenden Antwortdaten zuerst in der Antwortstation (R) und nachfolgend in der Abfragestation (Q) mit den von der Abfrage- zur Antwortstation (R, Q) zu übertragenden Abfragedaten EXOR-verknüpft werden und dass die Antwortdaten in der Abfragestation (Q) nur weiterverarbeitet werden, falls deren Checksumme richtig ist.

10. Verfahren nach einem der vorhergehenden Ansprüche, **dadurch gekennzeichnet**, dass in der Abfragestation (Q) ein Suchsignal mit zwei Frequenzlinien (ss1, ss2) erzeugt wird, die symmetrisch zu einer Mittenfrequenz liegen, dass das Suchsignal zur Antwortstation (R) übertragen und dort derart verzerrt wird, dass symmetrisch zur Mittenfrequenz zwei zusätzliche Frequenzlinien (as1, as2) entstehen, dass das resultierende Signal zur Abfragestation (Q) übertragen und darin festgestellt wird, ob die Frequenzlinien (as1, as2), die eine Kontaktaufnahme zwischen Abfrage- und Antwortstationen (Q, R) anzeigen, im Signalgemisch enthalten sind.

11. Verfahren nach einem der vorhergehenden Ansprüche, **dadurch gekennzeichnet**, dass die Sendeleistung in der Abfragestation (Q) auf einem reduzierten Wert gehalten wird, solange kein Kontakt zwischen den Abfrage- und Antwortstationen (Q, R) besteht (Suchmodus), dass die Sendeleistung in der Abfragestation (Q) nach Kontaktaufnahme zwischen den Abfrage- und Antwortstationen (Q, R) für die Datenübertragung erhöht wird (Abfragemodus) und dass die Sendeleistung in der Abfragestation (Q) vorzugsweise derart gesteuert oder geregelt wird, dass die Antwortsignale einen festgelegten Maximalwert nicht überschreiten.

12. Zur Durchführung des Verfahrens nach Anspruch 1 geeignetes Übertragungssystem mit einer Abfragestation (Q1, Q2), die einen Oszillator (MCL) aufweist, der über wenigstens einen mit einem Steuergerät (ENC, SG) verbundenen Modulator (PSK-M, MX1) mit einem an eine Antenne (A) sowie an eine Empfangsstufe (DET, DEC) angeschlossenen Zirkulator (C) verbunden ist und mit einer Antwortstation (R1, R2, R3), die ein mit einer Antenne (A) verbundenes Bauteil (OFW) aufweist, das zur Reflektion der von der Abfragestation (Q1, Q2) empfangenen Signale geeignet ist, die vor der Rückübertragung in der Antwortstation (R1, R2, R3) durch Mittel (CU, SW; IMP, RFT; CD2, ESW; CU, SW1, IDW) modulierbar sind, **dadurch gekennzeichnet**, dass im Sendepfad der Abfragestation (Q1, Q2) ein Pulsmodulator (IPM) vorgesehen ist, der ein zugeführtes Signal in Abfrageimpulse umwandelt, dass in der Antwortstation (R1, R2, R3) Mittel (SW; SWt1; ESW) vorgesehen sind, die zur Erhöhung der Bandbreite der reflektierten Signale vorgesehen sind und dass im Empfangspfad der Abfragestation (Q1, Q2) ein Bandpassfilter (BPF) vorgesehen ist, durch das Signalanteile von empfangenen Signalen gesperrt werden, deren Frequenzen innerhalb des Frequenzspektrums der von der Abfragestation (Q1, Q2) ausgesendeten Abfrageimpulse liegen.

13. Übertragungssystem nach Anspruch 12, **dadurch gekennzeichnet**, dass das in der Antwortstation (R1, R2, R3) vorgesehene Bauteil (OFW) ein Oberflächenwellenfilter ist, das einen mit einer Antenne (A) verbundenen Eingangs-Interdigitalwandler (IDWi) sowie mindestens einen Reflektor (RFT) und/oder mindestens einen Ausgangs-Interdigitalwandler (IDWa) aufweist, dass zur Erzielung einer Erweiterung der Bandbreite der aus den Abfrageimpulsen geformten Antwortsignale, Mittel (SW; SWt1; ESW) vorgesehen sind, die zur Kürzung oder Segmentierung eines zu reflektierenden Abfrageimpulses dienen.

14. Übertragungssystem nach Anspruch 13, **dadurch gekennzeichnet**, dass die Antenne (A) über einen steuerbaren Schalter mit dem Eingangs-Interdigitalwandler (IDWi) verbunden ist oder dass, zur Bandbreitenerweiterung und zur Datenübertragung, ein von einer Steuereinheit (CU) gesteuerter Schalter (SW; SWt1) vorgesehen ist, durch den einer oder einer von zwei gegeneinander verschobenen Ausgangs-Interdigitalwandler (IDWa-1; IDWa-2) über einen Zirkulator (Cx) mit der Antenne (A) oder ein Reflektor (RFT + 45; RFT-45) mit einer Impedanz (IMP) verbindbar ist.

15. Übertragungssystem nach Anspruch 13 oder 14, **dadurch gekennzeichnet**, dass Mittel (RECT, DTH) vorgesehen sind, die geeignet sind, das Eintreffen eines Abfrageimpulses festzustellen und an die Steuereinheit (CU) zu melden, welche entsprechend den zu übertragenden Daten vd-b und/oder der zeitlichen Lage des Abfrageimpulses zur zeitrichtigen Betätigung des Schalters (SW; SWt1) geeignet ist.

16. Übertragungssystem nach einem der Ansprüche 12-15, **dadurch gekennzeichnet**, dass die Abfragestation (Q2), die einen Oszillator (SO, MCL) aufweist, der über eine Mischstufe (Mx1), einen Verstärker (AMP) und einen Zirkulator (C) mit einer Antenne (A) verbunden ist, dass die Mischstufe (MX1) ferner mit einem Signalgenerator (SG) verbunden oder verbindbar ist, der zur Erzeugung von Suchsignalen (ss) vorgesehen ist, dass der Zirkulator (C) ferner über ein Bandpassfilter (BPF1) und eine Zwischenfrequenzstufe (MX3, BPF4, PHS, MX2, RO) mit einer Filter- und Detektionsstufe (BPF5, RECT1, TH1) verbunden ist, in der Detektionssignale (as) detektiert werden, die in einer Antwortstation (R2) durch Intermodulationen der Suchsignale (ss) entstehen und zur Abfragestation (Q2) retourniert werden.

17. Übertragungssystem nach einem der Ansprüche 12-16, **dadurch gekennzeichnet**, dass die Abfragestation (Q2) einen Oszillator (SO) aufweist, der einerseits über eine Mischstufe (MX1), einen Verstärker (AMP) und andererseits über einen Regelverstärker (RA) mit einer Addierstufe (ADD) und weiter über einen Zirkulator (C) mit einer Antenne (A) verbunden ist, dass die Mischstufe (MX1) mit einem zur Abgabe FSK-, MSK- oder PSK - kodierter Daten vorgesehenen Signalgenerator (SG) verbunden oder verbindbar ist, dass der Zirkulator (C) ferner über ein Bandpassfilter (BPF1), eine nach dem Homodynprinzip arbeitende Demodulationsstufe (MX3, MX4, BPF3, BPF4, PHS, SO) und je einen Regelverstärker (LG1, LG2) mit einer Auswahllogik (SEL) verbunden ist, welche das leistungsstärkere am Ausgang der Regelverstärker (LG1, LG2) anliegende Signal vorzeichenkorrigiert an einen Demodulator (DEM) abgibt, der zur Rückgewinnung der unmodulierten Daten vorgesehen ist.

18. Übertragungssystem nach Anspruch 17, **dadurch gekennzeichnet**, dass der Detektor (DET) bzw. eine mit der Auswahllogik (SEL) verbundene Regelstufe (AGC) zur Messung der Intensität der empfangenen Antwortsignale und zur Abgabe eines davon abhängigen Steuersignals geeignet ist, das über eine Steuerleitung (agc) einem Steuereingang des Regelverstärkers (RA1; RA) zuführbar ist und durch das die Sendeleistung derart geregelt wird, dass die empfangenen Antwortsignale einen festgelegten Maximalwert nicht überschreiten und/oder durch das die Sendeleistung in Abhängigkeit der empfangenen Signale zwischen mindestens zwei Leistungsstufen umschaltbar ist.

19. Übertragungssystem nach Anspruch 18, **dadurch gekennzeichnet**, dass die Ausgangsleistung des Regelverstärkers (RA1; RA) zumindest teilweise reduzierbar ist, solange kein Kontakt zwischen den Abfrage- und Antwortstationen (Q, R) besteht und/oder dass die abzugebenden Abfragesignale entsprechend einem Kodewort modulierbar sind und dass die Empfangsstufe der Abfragestation (Q) derart ausgestaltet ist, dass die empfangenen Signale mit dem Kodewort korrelierbar und vorzugsweise einer Schwellwertschaltung zuführbar sind.

20. Übertragungssystem nach Anspruch 12, **dadurch gekennzeichnet**, dass die Antwortstation (R2) eine Antenne (A) aufweist, an die ein Gleichrichter (RECT2) angekoppelt ist, der über ein Bandpassfilter (BPF6) mit einem Taktregenerator (TRG) und einem Dekoder (DEC2) verbunden ist, mit einer durch einen Schalter (ESW) kurzschliessbaren λ/4-Leitung (λ/4), die eine an die Antenne (A) angekoppelte Leitung (AZ2) abschliesst, an der die Abfragesignale modulierbar reflektiert werden, mit einer nach dem FSK-, MSK- oder PSK-Verfahren arbeitenden Kodierstufe (CD2), der die zu übertragenden Daten zuführbar sind und deren Ausgang mit dem Steuereingang des Schalters (ESW) verbunden ist und dass der Eingang der Kodierstufe (CD2) vorzugsweise über einen Multiplexer (MPL) mit einem Datenpuffer (BFF) oder einem Speicherbaustein (ROM) verbindbar ist.

## Claims

1. Method for data transmission between query and response stations (Q, R) which are provided for the reception and for the emission of carrier-frequency signals, characterized in that query signals are transmitted by the query station to the response station (Q; R), the frequency spectrum of which query signals lies within the frequency spectrum of the response signals which are transmitted by the response station to the query station (R; Q), in that in the receiving part of the query station (Q) signal components of received signals, the frequencies of which lie within the frequency spectrum of the query signals, are blocked, and in that the remaining signal components of optionally received response signals, in which the information transmitted by the response station to the query station (R; Q) is completely contained, if the quality of the transmission paths corresponds to the demands set, are further processed in the query station (Q).

2. Method according to claim 1, characterized in that the frequency spectra of the query and response signals are achieved by means of appropriate modulation of the existing carrier signals, which have at least approximately the same carrier frequency, and in that this appropriate modulation is achieved in particular by way of the coding of the data, which is to be transmitted, according to an FSK, MSK or PSK method.

3. Method according to claim 2, characterized in that the data to be transmitted between the two stations (Q; R) is converted from a "non-return-to-zero" format into a "return-to-zero" format and is supplied to a signal generator (SG), the output signal of which is keyed between two frequencies in dependence upon the supplied data signal, the values of which frequencies are selected for the query station (Q) with a shorter interval than the frequency values provided for the response station (R), and in that the carrier signals are modulated with the signals which are coded in this way.

4. Method according to claim 1, characterized in that the response station (R1) has at least one delay line, preferably a SAW component (OFW) which is provided with a substrate suitable for the conduction of surface acoustic waves, on which substrate at least one input interdigital converter (IDWi) as well as at least one reflector (RFT) and/or at least one output interdigital converter (IDWa) is provided, in that narrow-band query pulses are transmitted by the query station to the response station (Q1; R1), which query pulses are modified in the response station (R1) in such a way that the frequency spectrum of the modified query pulses lies at least partially outside the frequency range of the unmodified query pulses, in that the query pulses are supplied by way of the input interdigital converter (IDWi) to the SAW component (OFW) and are reflected to the query station (Q1).

5. Method according to claim 4, characterized in that the change of the frequency spectrum of the unmodified query pulses in the response station (R) is achieved by signal components of the query pulses, the intensity of which does not lie above an established threshold value, being suppressed, or by the unchanged query pulses being guided to at least one reflector (RFT+45; RFT-45) which can be selectively activated, or at least to an output interdigital converter (IDWa-1, IDWa-2) which can be selectively connected to the aerial (A), by means of which, in dependence upon the data to be transmitted, sections of the query pulses are reflected to the query station (Q).

6. Method according to claim 4, characterized in that, corresponding to the data (vd-t; vd-b) to be transmitted, the unmodified query pulses in the query station (Q) are phase-modulated and/or the response pulses in the response station (R) are position-modulated, length-modulated, phase-modulated and/or amplitude-modulated, and in that the transmitted signals in the receiving stage of the response station (R) or the query station (Q) are demodulated, and/or in that the response pulses are selectively switched through to the aerial (A) by one of two output interdigital converters (IDWa-1, IDWa-2) which are displaced with respect to each other, or in that sections of the query pulses are reflected back to the aerial (A) by one of two reflectors (RFT+45; RFT-45) which are displaced with respect to each other and which can be selectively activated.

7. Method according to claim 6, characterized in that the phase-modulated query pulses in the response station (R1) are emitted to the first input of a respective mixer stage (MX-I; MX-Q), and as reference by way of the surface acoustic wave component (OFW), delayed by the period of the query pulse repetition frequency, to two output interdigital converters (IDWa-1, IDWa-2) which are displaced with respect to each other, which supply two signals, out of phase by 90° with respect to each other, to the second input of the mixer stage (MX-I and MX-Q), and in that the signals mixed in the mixer stages (MX-I, MX-Q) are supplied to a respective input of a phase detector (PD).

8. Method according to one of the preceding claims, characterized in that each query station (Q) emits at time intervals Tp periodically query pulses or sequences of query pulses to an allocated response station (R), which are individually differently modulated, preferably corresponding to a code word, and are correlated with the received signals, and in that only those received signals which correlate with the emitted signals are processed further.

9. Method according to one of the preceding claims, characterized in that the response data to be transmitted by the response station to the query station (R, Q) is first of all EXOR-linked in the response station (R) and subsequently in the query station (Q) with the query data to be transmitted from the query station to the response station (R, Q), and in that the response data in the query station (Q) is only processed further if its check sum is correct.

10. Method according to one of the preceding claims, characterized in that in the query station (Q) a search signal with two frequency lines (ss1, ss2) is generated, which frequency lines lie symmetrical to a centre frequency, in that the search signal is transmitted to the response station (R) and is distorted there in such a way that two additional frequency lines (as1, as2) arise symmetrical to the centre frequency, in that the resulting signal is transmitted to the query station (Q) and therein it is ascertained whether the frequency lines (as1, as2) which display a contacting between query and response stations (Q, R) are contained in the signal mixture.

11. Method according to one of the preceding claims, characterized in that the transmitting power in the query station (Q) is kept at a reduced value as long as there is no contact between the query and response stations (Q, R) (search mode), in that the transmitting power in the query station (Q), after contacting between the query and response stations (Q, R), is increased for the data transmission (query mode), and in that the transmitting power in the query station (Q) is preferably controlled or regulated in such a way that the response signals do not exceed an established maximum value.

12. Transmission system suitable for carrying out the method according to claim 1, having a query station (Q1, Q2), which has an oscillator (MCL), which is connected by way of at least one modulator (PSK-M, MX1), connected to a control device (ENC, SG), with a circulator (C) connected to an aerial (A) and to a receiving stage (DET, DEC), and having a response station (R1, R2, R3) which has a component (OFW) connected to an aerial (A), which component is suitable for the reflection of the signals received by the query station (Q1, Q2), which signals can be modulated before the retransmission in the response station (R1, R2, R3) by means (CU, SW; IMP, RFT; CD2, ESW; CU, SWt1, IDW), characterized in that in the transmitting path of the query station (Q1, Q2) a pulse modulator (IPM) is provided, which converts a supplied signal into query pulses, in that in the response station (R1, R2, R3) means (SW; SWt1; ESW) are provided which are provided to increase the bandwidth of the reflected signals, and in that in the receiving path of the query station (Q1, Q2) a bandpass filter (BPF) is provided, by means of which signal components of received signals, the frequencies of which lie within the frequency spectrum of the query pulses emitted by the query station (Q1, Q2), are blocked.

13. Transmission system according to claim 12, characterized in that the component (OFW) provided in the response station (R1, R2, R3) is a surface acoustic wave filter which has an input interdigital converter (IDWi), connected to an aerial (A), and at least one reflector (RFT) and/or at least one output interdigital converter (IDWa), in that to achieve a widening of the bandwidth of the response signals formed from the query pulses means (SW; SWt1; ESW) are provided which are used for the shortening or segmenting of a query pulse to be reflected.

14. Transmission system according to claim 13, characterized in that the aerial (A) is connected by way of a controllable switch to the input interdigital converter (IDWi) or in that, for bandwidth widening and for data transmission a switch (SW; SWt1) controlled by a control unit (CU) is provided, by means of which switch a or one of two output interdigital converters (IDWa-1; IDWa-2), displaced with respect to each other, can be connected by way of a circulator (Cx) to the aerial (A) or by way of a reflector (RFT+45; RFT-45) to an impedance (IMP).

15. Transmission system according to claim 13 or 14, characterized in that means (RECT, DTH) are provided which are suitable for establishing the arrival of a query pulse and for signalling this to the control unit (CU), which, according to the data vd-b to be transmitted and/or the temporal position of the query pulse, is suitable for the time-correct actuation of the switch (SW; SWt1).

16. Transmission system according to one of claims 12-15, characterized in that the query station (Q2) which has an oscillator (SO, MCL), which is connected by way of a mixer stage (MX1), an amplifier (AMP) and a circulator (C) to an aerial (A) [...], in that the mixer stage (MX1), moreover, is connected or can be connected to a signal generator (SG), which is provided for the generation of search signals (ss), in that the circulator (C), moreover, is connected by way of a bandpass filter (BPF1) and an intermediate frequency stage (MX3, BPF4, PHS, MX2, RO) to a filter and detection stage (BPF5, RECT1, TH1), in which detection signals (as) are detected, which arise in a response station (R2) as a result of intermodulations of the search signals (ss) and are returned to the query station (Q2).

17. Transmission system according to one of claims 12-16, characterized in that the query station (Q2) has an oscillator (SO) which is connected on one side by way of a mixer stage (MX1), an amplifier (AMP) and, on the other side, by way of a control amplifier (RA) to an adding stage (ADD), and then by way of a circulator (C) to an aerial (A), in that the mixer stage (MX1) is connected or can be connected to a signal generator (SG) provided for the emission of FSK, MSK or PSK coded data, in that the circulator (C), moreover, is connected by way of a bandpass filter (BPF1), a demodulation stage (MX3, MX4, BPF3, BPF4, PHS, SO), operating according to the homodyne principle, and a respective control amplifier (LG1, LG2) to a selection logic unit (SEL), which emits the more powerful signal present at the output of the control amplifiers (LG1, LG2), with sign corrected, to a demodulator (DEM) which is provided for the recovery of the unmodulated data.

18. Transmission system according to claim 17, characterized in that the detector (DET) or a control stage (AGC) connected to the selection logic unit (SEL) is suitable for the measurement of the intensity of the received response signals and for the emission of a control signal dependent thereon, which control signal can be supplied by way of a control line (agc) to a control input of the control amplifier (RA1; RA), and by means of which the transmitting power is controlled in such a way that the received response signals do not exceed an established maximum value, and/or by means of which the transmitting power can be switched over between at least two power stages in dependence upon the received signals.

19. Transmission system according to claim 18, characterized in that the output power of the control amplifier (RA1; RA) can be reduced at least partially as long as there is no contact between the query and response stations (Q, R), and/or in that the query signals to be emitted can be modulated according to a code word, and in that the receiving stage of the query station (Q) is developed in such a way that the received signals can be correlated with the code word and can preferably be supplied to a threshold value circuit.

20. Transmission system according to claim 12, characterized in that the response station (R2) has an aerial (A) to which a rectifier (RECT2) is coupled, which is connected by way of a bandpass filter (BPF6) to a clock regenerator (TRG) and a decoder (DEC2), with a λ/4 line (λ/4) which can be short-circuited by a switch (ESW), which λ/4 line closes a line (AZ2) coupled to the aerial (A), at which line (AZ2) the query signals are reflected so that they can be modulated, with a coding stage (CD2) operating according to the FSK, MSK or PSK method, to which coding stage the data to be transmitted can be supplied, and the output of which is connected to the control input of the switch (ESW), and in that the input of the coding stage (CD2) can be connected preferably by way of a multiplexer (MPL) to a data buffer (BFF) or a memory module (ROM).

## Revendications

1. Procédé de transmission de données entre des postes d'interrogation (Q) et des postes de réponse (R) qui sont prévus pour la réception et pour l'émission de signaux à fréquence porteuse, **caractérisé par le fait que** le poste d'interrogation (Q) émet vers le poste de réponse (R) des signaux d'interrogation dont le spectre de fréquence se trouve à l'intérieur du spectre de fréquence des signaux de réponse qui sont transmis par le poste de réponse (R) vers le poste d'interrogation (Q), qu'on arrête dans la partie réceptrice du poste d'interrogation (Q) des composantes de signaux reçus dont les fréquences se trouvent dans le spectre de fréquence des signaux d'interrogation et que les composantes de signaux restantes de signaux de réponse éventuellement reçus, dans lesquelles l'information transmise par le poste de réponse (R) au poste d'interrogation (Q) est complètement contenue, sont traitées dans le poste d'interrogation (Q) ai la qualité des trajets de transmission correspond aux exigences posées.

2. Procédé selon la revendication 1, **caractérisé par le fait qu**'on obtient les spectres de fréquences des signaux d'interrogation et de réponse par une modulation correspondante des signaux porteurs présents qui ont au moins approximativement la même fréquence porteuse et qu'on obtient cette modulation correspondante notamment au moyen du codage des données à transmettre selon un procédé FSK, MSK ou PSK.

3. Procédé selon la revendication 2, **caractérisé par le fait qu**'on transforme les données à transmettre entre les deux postes (Q ; R) d'un format "non-return-to-zero" en un format "return-to-zero", qu'on les envoie à un générateur de signaux (SG) dont on module par déplacement le signal de sortie, en fonction du signal de données envoyé, entre deux fréquences dont les valeurs ont été choisies pour le poste d'interrogation (Q) avec un plus petit écart que les valeurs fréquentielles prévues pour le poste de réponse (R) et qu'on module les signaux porteurs par les signaux ainsi codés.

4. Procédé selon la revendication 1, **caractérisé par le fait que** le poste de réponse (R1) comporte au moins une ligne à retard, de préférence un composant à onde de surface (OFW) muni d'un substrat qui convient à la propagation des ondes de surface et sur lequel on prévoit au moins un transducteur interdigité d'entrée (IDWi) et au moins un réflecteur (RFT) et/ou au moins un transducteur interdigité de sortie (IDWa), qu'on transmet du poste d'interrogation (Q1) au poste de réponse (R1) des impulsions d'interrogation à bande étroite qui sont modifiées dans le poste de réponse (R1) de telle sorte que le spectre de fréquence des impulsions d'interrogation modifiées se trouve au moins partiellement en dehors du domaine fréquentiel des impulsions d'interrogation non modifiées, qu'on envoie les impulsions d'interrogation par l'intermédiaire du transducteur interdigité d'entrée (IDWi) au composant à onde de surface (OFW) et qu'on les réfléchit vers le poste d'interrogation (Q1).

5. Procédé selon la revendication 4, **caractérisé par le fait que**, dans le poste de réponse (R), on obtient la modification du spectre de fréquence des impulsions d'interrogation non modifiées en supprimant des composantes de signaux des impulsions d'interrogation dont l'intensité n'est pas supérieure à une valeur de seuil fixée ou en envoyant les impulsions d'interrogation non modifiées à au moins un réflecteur (RFT + 45 ; RFT - 45) pouvant être activé sélectivement ou à au moins un transducteur interdigité de sortie (IDWa-1, IDWa-2) pouvant être relié sélectivement à l'antenne (A), éléments par lesquels des sections des impulsions d'interrogation sont réfléchies vers le poste d'interrogation (Q) en fonction des données à transmettre.

6. Procédé selon la revendication 4, **caractérisé par le fait que**, en fonction des données à transmettre (vd-t ; vd-b), on module en phase dans le poste d'interrogation (Q) les impulsions d'interrogation non modifiées et/ou on module en position, en longueur, en phase et/ou en amplitude dans le poste de réponse (R) les impulsions de réponse et qu'on démodule les signaux transmis dans l'étage récepteur du poste de réponse (R) ou du poste d'interrogation (Q) et/ou qu'on commute vers l'antenne (A) les impulsions de réponse au choix depuis l'un des deux transducteurs interdigités de sortie (IDWa-1, IDWa-2) décalés l'un par rapport à l'autre ou qu'on réfléchit vers l'antenne (A) des sections des impulsions d'interrogation au moyen d'un des deux réflecteurs (RFT + 45 ; RFT - 45) décalés l'un par rapport à l'autre et pouvant être activés au choix.

7. Procédé selon la revendication 6, **caractérisé par le fait qu**'on envoie les impulsions d'interrogation modulées en phase dans le poste de réponse (R1) à chaque fois à la première entrée d'un étage mélangeur (MX-I ; MX-Q) et, comme référence, par l'intermédiaire d'un composant à onde de surface (OFW) et avec un retard égal à la période de la fréquence de répétition d'impulsions d'interrogation, à deux transducteurs interdigités de sortie (IDWa-1, IDWa-2) qui sont décalés l'un par rapport à l'autre et qui envoient deux signaux déphasés de 90° l'un par rapport à l'autre à la deuxième entrée de l'étage mélangeur (MX-I, MX-Q) et qu'on envoie les signaux mélangés dans les étages mélangeurs (MX-I, MX-Q) à chaque fois à une entrée d'un détecteur de phase (PD).

8. Procédé selon l'une des revendications précédentes, **caractérisé par le fait que** chaque poste d'interrogation (Q) émet périodiquement à des intervalles de temps Tp, vers un poste de réponse (R) associé, des impulsions d'interrogation ou des séquences d'impulsions d'interrogation qui sont modulées individuellement différemment, de préférence selon un mot de code, et qui sont corrélées avec les signaux reçus et que seuls les signaux reçus qui sont en corrélation avec les signaux émis sont traités.

9. Procédé selon l'une des revendications précédentes, **caractérisé par le fait que**, d'abord dans le poste de réponse (R) et ensuite dans le poste d'interrogation (Q), on effectue une combinaison EXOR des données de réponse à transmettre du poste de réponse (R) au poste d'interrogation (Q) et des données d'interrogation à transmettre du poste d'interrogation (Q) au poste de réponse (R) et que, dans le poste d'interrogation (Q) on ne traite que les données de réponse dont la somme de contrôle est correcte.

10. Procédé selon l'une des revendications précédentes, **caractérisé par le fait que**, dans le poste d'interrogation (Q), on produit un signal de recherche ayant deux lignes de fréquence (ss1, ss2) qui sont symétriques par rapport à une fréquence centrale, qu'on transmet le signal de recherche au poste de réponse (R) où il subit une distorsion de telle sorte qu'il se forme symétriquement par rapport à la fréquence centrale deux lignes de fréquence supplémentaires (as1, as2), et qu'on transmet le signal résultant au poste d'interrogation (Q) où l'on détermine si les lignes de fréquence (as1, as2) qui indiquent une prise de contact entre les postes d'interrogation et de réponse (Q, R) sont contenues dans le signal composite.

11. Procédé selon l'une des revendications précédentes, **caractérisé par le fait qu**'on maintient la puissance émettrice dans le poste d'interrogation (Q) à une valeur réduite tant qu'il n'y a pas de contact entre les postes d'interrogation et de réponse (Q, R) (mode recherche), qu'on augmente la puissance émettrice dans le poste d'interrogation (Q) après l'entrée en contact des postes d'interrogation et de réponse (Q, R) en vue de la transmission de données (mode interrogation) et qu'on commande ou règle la puissance émettrice dans le poste d'interrogation (Q) de préférence de telle sorte que les signaux de réponse ne dépassent pas une valeur maximale fixée.

12. Système de transmission convenant à la mise en oeuvre du procédé selon la revendication 1, avec un poste d'interrogation (Q1, Q2) qui comporte un oscillateur (MCL) qui est relié par l'intermédiaire d'au moins un modulateur (PSK-M, MX1) relié à un appareil de commande (ENC, SG) à un circulateur (C) raccordé à une antenne (A) ainsi qu'à un étage récepteur (DET, DEC) et avec un poste de réponse (R1, R2, R3) qui comporte un composant (OFW) qui est relié à une antenne (A) et qui convient à la réflexion des signaux qui sont reçus du poste d'interrogation (Q1, Q2) et qui, avant la retransmission, sont modulables dans le poste de réponse (R1, R2, R3) par des moyens (CU, SW ; IMP, RFT ; CD2, ESW ; CU, SWt1, IDW), **caractérisé par le fait qu**'il est prévu dans le chemin d'émission du poste d'interrogation (Q1, Q2) un modulateur d'impulsion (IPM) qui transforme un signal envoyé en impulsions d'interrogation, qu'il est prévu dans le poste de réponse (R1, R2, R3) des moyens (SW ; SWt1 ; ESW) qui sont prévus pour l'augmentation de la largeur de bande des signaux réfléchis et qu'il est prévu dans le chemin de réception du poste d'interrogation (Q1, Q2) un filtre passe-bande (BPF) par lequel des composantes de signaux reçus dont les fréquences se trouvent à l'intérieur du spectre de fréquence des impulsions d'interrogation émises par le poste d'interrogation (Q1, Q2) sont arrêtées.

13. Système de transmission selon la revendication 12, **caractérisé par le fait que** le composant (OFW) prévu dans le poste de réponse (R1, R2, R3) est un filtre à onde de surface qui comporte un transducteur interdigité d'entrée (IDWi) relié à une antenne (A) ainsi qu'au moins un réflecteur (RFT) et/ou au moins un transducteur interdigité de sortie (IDWa), qu'il est prévu pour obtenir un élargissement de la largeur de bande de signaux de réponse formés à partir des impulsions d'interrogation des moyens (SW ; SWt1 ; ESW) qui servent à raccourcir ou à segmenter une impulsion d'interrogation à réfléchir.

14. Système de transmission selon la revendication 13, **caractérisé par le fait que** l'antenne (A) est reliée par l'intermédiaire d'un commutateur commandable au transducteur interdigité d'entrée (IDWi) ou qu'il est prévu pour l'élargissement de largeur de bande et pour la transmission de données un commutateur (SW ; SWt1) qui est commandé par une unité de commande (CU) et par lequel un transducteur interdigité de sortie ou un parmi deux transducteurs interdigités de sortie décalés l'un par rapport à l'autre (IDWa-1 ; IDWa-2) peut être relié par l'intermédiaire d'un circulateur (Cx) à l'antenne (A) ou un réflecteur (RFT + 45 ; RFT - 45) à une impédance (IMP).

15. Système de transmission selon la revendication 13 ou 14, **caractérisé par le fait qu**'il est prévu des moyens (RECT, DTH) qui conviennent à la détermination de l'arrivée d'une impulsion d'interrogation et à la signalisation de celle-ci à une unité de commande (CU) qui convient à l'actionnement du commutateur (SW ; SWt1) à l'instant correct en fonction des données à transmettre vd-b et/ou de la position temporelle de l'impulsion d'interrogation.

16. Système de transmission selon l'une des revendications 12 à 15, **caractérisé par le fait que** le poste d'interrogation (Q2) comporte un oscillateur (SO, MCL) qui est relié par l'intermédiaire d'un étage mélangeur (MX1), d'un amplificateur (AMP) et d'un circulateur (C) à une antenne (A), que l'étage mélangeur (MX1) est relié ou peut être relié de plus à un générateur de signaux (SG) qui est prévu pour la production de signaux de recherche (ss), que le circulateur (C) est relié de plus par l'intermédiaire d'un filtre passe-bande (BPF1) et d'un étage à fréquence intermédiaire (MX3, BPF4, PHS, MX2, RO) à un étage de filtrage et de détection (BPF5, RECT1, TH1) dans lequel sont détectés des signaux de détection (as) qui sont formés dans un poste de réponse (R2) par des intermodulations des signaux de recherche (ss) et qui sont retournés au poste d'interrogation (Q2).

17. Système de transmission selon l'une des revendications 12 à 16, **caractérisé par le fait que** le poste d'interrogation (Q2) comporte un oscillateur (SO) qui est relié d'une part par l'intermédiaire d'un étage mélangeur (MX1), d'un amplificateur (AMP) et d'autre part par l'intermédiaire d'un amplificateur de réglage (RA) à un étage additionneur (ADD) et plus loin par l'intermédiaire d'un circulateur (C) à une antenne (A), que l'étage mélangeur (MX1) est relié ou peut être relié à un générateur de signaux (SG) prévu pour la délivrance de données codées FSK, MSK ou PSK, que le circulateur (C) est relié de plus par l'intermédiaire d'un filtre passebande (BPF1), d'un étage de démodulation (MX3, MX4, BPF3, BPF4, PHS, SO) travaillant selon le principe homodyne et à chaque fois d'un amplificateur de réglage (LG1, LG2) à une logique de sélection (SEL) qui délivre après correction de signe le signal, présent avec une plus grande puissance à la sortie des amplificateurs de réglage (LG1, LG2), à un démodulateur (DEM) qui est prévu pour récupérer les données non modulées.

18. Système de transmission selon la revendication 17, **caractérisé par le fait que** le détecteur (DET) ou un étage de réglage (AGC) relié à la logique de sélection (SEL) convient à la mesure de l'intensité des signaux de réponse reçus et à la délivrance d'un signal de commande dépendant de cette intensité, pouvant être envoyé par l'intermédiaire d'une ligne de commande (agc) à une entrée de commande de l'amplificateur de réglage (RA1 ; RA) et permettant de régler la puissance émettrice de telle sorte que les signaux de réponse reçus ne dépassent pas une valeur maximale fixée et/ou permettant de commuter la puissance émettrice entre au moins deux niveaux de puissance en fonction des signaux reçus.

19. Système de transmission selon la revendication 18, **caractérisé par le fait que** la puissance de sortie de l'amplificateur de réglage (RA1 ; RA) peut être au moins partiellement réduite tant qu'il n'y a pas de contact entre les postes d'interrogation et de réponse (Q, R) et/ou que les signaux d'interrogation à délivrer sont modulables en fonction d'un mot de code et que l'étage récepteur du poste d'interrogation (Q) est conçu de telle sorte que les signaux reçus peuvent être corrélés avec le mot de code et peuvent être envoyés de préférence à un circuit à valeur de seuil.

20. Système de transmission selon la revendication 12, **caractérisé par le fait que** le poste de réponse (R2) comporte une antenne (A), à laquelle est couplé un redresseur (RECT2) qui est relié par l'intermédiaire d'un filtre passe-bande (BPF6) à un générateur d'horloge (TRG) et à un décodeur (DEC2), une ligne λ/4 (λ/4), qui peut être court-circuitée par un commutateur (ESW) et qui termine une ligne (AZ2) qui est couplée à l'antenne (A) et à laquelle les signaux d'interrogation sont réfléchis de manière modulable, un étage codeur (CD2), qui fonctionne selon le procédé FSK, MSK ou PSK, qui peut recevoir les données à transmettre et dont la sortie est reliée à l'entrée de commande du commutateur (ESW), et que l'entrée de l'étage codeur (CD2) peut être reliée de préférence par l'intermédiaire d'un multiplexeur (MPL) à un tampon de données (BFF) ou à un composant de mémoire (ROM).
